# EUROPEAN PATENT APPLICATION

(11) **EP 1 508 855 A2**
(43) Date of publication of application: **23.02.2005**
(21) Application number: 04254994.9
(22) Date of filing: 19.08.2004
(51) Int. Cl.: G06F 9/455

(54) **Method and apparatus for providing virtual computing services**

(30) Priority: 20.08.2003 US 496567 P; 26.04.2004 US 831973
(71) Applicant: Katana Technology, Inc., Acton, MA 01720 (US)
(72) Inventor: Vasilevsky, Alexander David, Westford, Massachusetts 01886 (US); Davis, Scott Howard, Needham, Massachusetts 02494 (US); Thomas, Benjamin Joseph III, Bedford, Massachusetts 01730 (US)
(74) Representative: Walaski, Jan Filip

(57) **Abstract**

A level of abstraction is created between a set of physical processors and a set of virtual multiprocessors to form a virtualized data center. This virtualized data center comprises a set of virtual, isolated systems separated by a boundary referred as a partition. Each of these systems appears as a unique, independent virtual multiprocessor computer capable of running a traditional operating system and its applications. In one embodiment, the system implements this multi-layered abstraction via a group of microkernels, each of which communicates with one or more peer microkernel over a high-speed, low-latency interconnect and forms a distributed virtual machine monitor. Functionally, a virtual data center is provided, including the ability to take a collection of servers and execute a collection of business applications over a compute fabric comprising commodity processors coupled by an interconnect. Processor, memory and I/O are virtualized across this fabric, providing a single system, scalability and manageability. According to one embodiment, this virtualization is transparent to the application, and therefore, applications may be scaled to increasing resource demands without modifying the application.

## Description

### Field of the Invention

The field of the invention relates generally to networked computing services, and more specifically, to networked computer systems used to provide resources in a data center.

### Background of the Related Art

Conventional datacenters include a complex mesh ofN-tier applications. Each tier typically includes multiple servers (nodes) that are dedicated to each application or application portion. These nodes generally include one or more computer systems that execute an application or portion thereof, and provide computing resources to clients. Some systems are general purpose computers (e.g., a Pentium-based server system) having general purpose operating systems (e.g., Microsoft Server 2003) while others are special-purpose systems (e.g., a network attached storage system, database server, etc.) that is specially developed for this purpose using custom operating system(s) and hardware. Typically, these servers provide a single function (e.g., file server, application server, backup server, etc.) to one or more client computers coupled through a communication network (e.g., enterprise network, Internet, combination of both).

Configurations of datacenter resources may be adjusted from time to time depending on the changing requirements of the applications used, performance issues, reallocation of resources, and other reasons. Configuration changes are performed, for example, by manually reconfiguring servers, adding memory/storage, etc., and these changes generally involve a reboot of affected computer systems and/or an interruption in the execution of the affected application. There exist other techniques such as server farms with front-end load balancers and grid-aware applications that allow the addition and deletion of resources, however, the operating systems or applications on which they are supported must be specifically developed to operate in such an environment.

### SUMMARY OF THE INVENTION

According to one aspect of the present invention, it is realized that the conventional datacenter environment and associated systems are largely inflexible in many dimensions, including resource allocation, usage and sharing. That is, resource allocation, usage and sharing are directly impacted by physical server node boundaries. The result is that each application is hosted on a set of dedicated, single function servers.

Also, it is realized that each of these types of servers is typically over-provisioned due to the inflexibility of the environment. More particularly, each application component executes on a server geared to more than the maximum workload the server will ever experience from the application, resulting in rampant under-utilization of the computing resources. For the majority of the time, the server experiences much less than its maximum design workload. Also, it is realized that because resources in this environment are hard-provisioned, the environment does not allow adequate flexibility in response to changing business and customer needs. More particularly, as customer and business needs change, expanding (or contracting) the server resources or applying excess resources where they are needed is difficult, and generally requires time and effort on the part of an administrator to reconfigure/upgrade the affected server system(s).

Conventional single-function server architecture leads to a multiplicity of servers in the datacenter, each of which requires independent management and configuration. Further, the single function server is a single point of failure in the system, and backup capabilities are not easily placed into service without additional specialized hardware or software, or downtime and effort on the part of an administrator.

Conventional application server farms usually provided with a server load balancer generally require that each server not maintain state, and state must be persisted in networked or shared storage (e.g., a database) such that independent server processes may share data. Such applications require that the application be modified to store data to suit the persisted architecture. There are other types of applications and operating systems that operate in a cluster environment that are used to provide resources, but these conventional grid or cluster-aware applications need to be modified or specially-developed to operate with multiple processors in a coherent manner. This special development often requires the application or operating system to be more complex as a result. Another common feature of server farms and grid-aware applications and operating systems is that each of these environments involves systems that execute (and therefore, require management of) separate instances of an operating system on each server or grid or cluster member.

According to one aspect of the invention, an architecture is provided that allows an administrator to more easily manage computing resources (e.g., in a data center). In one embodiment, a virtualization layer is provided that allows operating systems (OSs) and their applications to be executed on a virtual server that spans more than one physical node. Because, according to one embodiment, the virtualization layer isolates the OS and their applications from the underlying physical nodes, resources may be managed without changes at the application or operating system interface levels. This is beneficial, for example, as the application or operating system need not be modified to function on multiple nodes (or types of nodes) and therefore, the cost in developing a scalable application is decreased.

There are many application environments in which such an architecture may be used. For instance, in a Java/J2EE programming environment that allows for rapid deployment of applications, such a virtualization layer may be beneficial in decreasing the cost of developing such applications. As is known, the Java/J2EE environment is an application execution environment that allows applications formed of one or more "servlets" to be executed on the server on behalf of the client over a communication network. Servlets interact with one another through a set of Java/J2EE Application Programming Interfaces (APIs). The J2EE/Java runtime environment may be executed as an application by a virtual server according to various embodiments of the present invention, allowing applications developed in this programming environment to be scalable without needing the applications or J2EE/Java runtime programming to be aware of a clustered or grid-based environment where applications are manually partitioned into groups of functions.

In a further example, specially-developed hardware/software systems may be replaced by software-only application that is executed on a virtual server according to various embodiments of the present invention. For instance, Network Attached Storage (NAS) functions conventionally performed by customized hardware and software may be provided as a software application executing on a virtual server. Conventionally, constructing clusters of NAS devices that behave as a single system (having a single file system) requires complex technology (e.g., a clustered file system that spans multiple NAS devices, or distributed that either span multiple NAS devices or execute in a front-end switching device). By contrast, a conventional file system program (e.g., UFS, EXT3, REISERFS via NFS, CIFS protocols, for instance) may be executed on a virtual server according to various embodiments of the present invention to provide a single-system image and multi-system scalability with little to no additional programming.

In another example, application servers may be constructed that are executed on a virtual server according to various embodiments of the present invention. As discussed above, in clustered OSes, each cluster node is required to execute a separate copy of the OS, and as a result applications that execute on the cluster generally must be cluster-aware. In some conventional clustered computing systems that support a single system image as typically understood in the art, multiple instances of an operating system are clustered to create an illusion of a single system to the application programmers. An application executed on a virtual multiprocessor server according to various embodiments of the present invention provides benefit of a single system and multiple server scalability, yet does not require the additional effort in developing a cluster-aware operating system and cluster-aware application. Further, because of the complexity in developing such applications, most of these applications are stateless, requiring persistence of data to be shared by multiple processors through a database system. Because a single system (and therefore a single OS) may be provided according to various embodiments of the present invention, applications need not be stateless. Also, as discussed above with respect to the Java/J2EE environment, multiple OS instances need not be managed.

In another aspect of the invention, an administrator is provided a tool for managing a virtual server that transparently includes one or more resources managed by the virtualization layer. According to one embodiment, the virtualization layer includes a distributed virtual machine monitor that provides a single system abstraction based upon coordinated, cooperating systems.

According to another aspect of the invention, the virtual server spans one or more nodes (e.g., servers), each of which may include one or more processors. To provision a new application, an administrator creates (e.g., in a management console) a new virtual server, transparently backed by data center resources. For instance, an administrator, in an interface of a management console can map applications/OS to a virtual server. When additional resources are needed for an application, the virtual server may be resized automatically (e.g., dynamically in real time). For instance, additional processing power (e.g., additional nodes and/or processors) may be allocated to a particular virtual server, additional memory, storage, or network capacity may be allocated to the virtual server.

One goal that may be realized by various aspects of the present invention is to create a horizontally scalable software system that allows multiple processors coupled by one or more interconnects to be easily partitioned into smaller systems, aggregated into larger systems, easily managed and be transparent to existing operating systems (e.g., Linux, Windows NT, Windows Server, etc.) and applications executing on these operating systems. For instance, these processors may be commercially-available processors (e.g. IA-32, IA-64, etc.) coupled by fast, low-latency interconnects such as, for example, InfiniBand, Ethernet, GigaNet, PCI-Express, Gigabit Ethernet or any other interconnect type. In addition, interconnects may use RDMA or other memory access techniques to reduce latency or improve throughput. However, it should be appreciated that the invention is not limited to any particular processor, interconnect, or memory access technique or architecture.

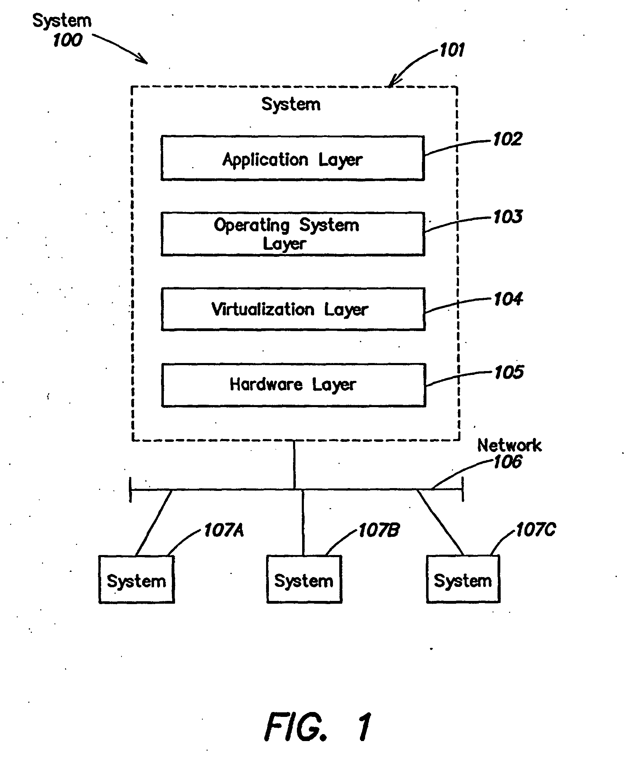

The virtual computing system may include a plurality of nodes having a variety of system components and resources, and a management infrastructure that is used to manage the virtual computing system. In particular, management functions relating to configuration and performance of the virtual computing system components and resources are performed through the management infrastructure. In one embodiment, a virtualization layer is provided that allows operating systems (OSs) and their applications to be executed on a virtual server that spans more than one physical node. One example of a virtual server system that may be managed using various aspects of the invention is shown below in Figure 1.

Because, according to one embodiment, the virtualization layer isolates the OS and their applications from the underlying physical nodes, resources may be managed without changes at the application or OS interface levels. According to one aspect of the invention, an administrator may manage a virtual server that transparently includes one or more resources managed through the virtualization layer. According to one embodiment, the virtualization layer includes a distributed virtual machine monitor that provides a single system abstraction based upon coordinated, cooperating systems and thereby controls access to physical resources underlying the virtual server.

It is to be appreciated that for the purposes of this explanation, the term "node" refers to a server platform that provides one or more processors, memory and I/O interfaces that may be used as resources in a virtual computer system. For example, an Intel-compatible server platform (e.g., IA32, IA64-based servers available from a variety of manufacturers) may be used, the server having one or more physical processors. Although Intel-based servers may be used, it should be appreciated that any processor based system may be used, and the invention is not limited to any particular processor type.

One or more nodes can be virtually grouped together into a defined subset (referred to hereinafter as a frame) to provide a distributed server. A distributed server is a pseudo-machine that includes a set of one or more nodes and other resources. These other resources may include, for example, virtual or physical storage, I/O, network or other entities that may be used to support the distributed server. A frame may be defined that includes the set of one or more nodes and other resources coupled by an interconnect. The interconnect may allow communication among the nodes and other resources.

In one embodiment, a distributed virtual machine monitor (DVMM) program forms a one-to-one mapping to a distributed server. In one embodiment, the distributed virtual machine monitor includes low level system software, a microkernel, which executes on each node of the distributed server. In one embodiment, the distributed virtual machine monitor may provide a cohesive environment that supports the OS. In particular, the distributed virtual machine monitor may provide virtualization support and access to resources by OSs and their applications.

According to one approach, the system provides a horizontal virtualization wherein applications are distributed across virtual servers. In one example system, an application is scaled horizontally across a virtual server, comprised of a set of virtual processors, each of which is mapped to one or more physical nodes. From the perspective of the application, the virtual server operates like a shared memory multi-processor, wherein tasks are executed by one or more of the virtual processors, and the multiple portions operate in parallel. For instance, using a set of physical nodes (e.g., servers) coupled through an interconnect, with flexible partitioning and virtualization through advanced software, a horizontal virtualization may be realized. The resulting system allows applications and operating systems to execute on virtual servers, where each of these virtual servers spans a collection of physical servers.

A virtual system architecture according to one embodiment of the invention differs from a conventional "grid" as applications need not be separated into separate function groups to operate. Rather, according to one embodiment, applications may be executed unchanged, because a single system is presented to the operating system and its applications. This architecture also differs from traditional cluster environments in that a single copy of the OS exists, whereas in a cluster environment, each cluster node executes a separate instance of the OS.

A virtual machine architecture may be presented to an operating system (OS). The OS (e.g., Linux, Microsoft Windows Server, Windows XP, etc.) may be ported to run on a virtual machine architecture (VMA) in much the same way that the OS can be ported to other processor architectures (e.g., SPARC, MIPS, etc.). According to one aspect of the present invention, the interface presented by the VMA is similar to a conventional machine architecture (e.g., the well-known IA-32 and IA-64 Intel architectures). However, it should be appreciated that other architectures may be used, and the invention is not limited to any particular architecture.

According to one aspect, the operating system (referred to herein as the guest operating system or GOS) that ported to the VMA "sees" a single-system as presented by the VMA. The VMA may present, for example, a multi-processor capable system to the GOS. Resources may be virtualized through an abstraction layer (e.g., distributed virtual machine monitor (DVMM)) and accessed through the VMA.

According to another aspect of the present invention, the architecture performs a hybrid virtualization of resources. In one embodiment, non-privileged instructions of the architecture are executed natively on the underlying processor (e.g., a physical processor). Because such instructions are executed natively by the physical processor, performance is increased. When privileged registers or instructions are accessed, an abstraction layer (e.g., functions of a distributed virtual machine monitor) may perform such access, providing isolation between the operating system/application and the underlying hardware. In one example, privileged code is replaced with calls into the distributed virtual machine monitor program.

According to one aspect of the invention, a system is provided comprising a processor, an operating system that accesses one or more virtual resources, and an abstraction layer that is adapted to map the one or more virtual resources to one or more physical resources. According to one embodiment, the one or more physical resources includes at least one of input/output (I/O) devices, processors, interconnects and storage entities. According to another embodiment, the operating system is adapted to generate a plurality of function calls, and the abstraction layer is adapted to map the plurality of function calls into processor instructions to be executed on a processor.

According to one embodiment, at least one of the operating system and a user program is adapted to generate an exception, and wherein the abstraction layer is adapted to handle the generated exception. According to another embodiment, the abstraction layer is adapted to handle one or more traps generated by at least one of an operating system and a user program. According to another embodiment, the operating system is adapted to generate a plurality of function calls, and wherein the abstraction layer is adapted to rewrite the function calls as processor instructions to be executed on a processor. According to one embodiment, the abstraction layer is adapted to rewrite the plurality of function calls during execution of the plurality of function calls.

According to one embodiment, the abstraction layer presents a virtual hardware interface to the operating system. According to another embodiment, the abstraction layer includes a microkernel that executes on a node. According to one embodiment, the node includes one or more physical processors. According to another embodiment, the abstraction layer presents an interface of a virtual processor to the operating system. According to one embodiment, a plurality of virtual processors is grouped into a virtual system to present the virtual hardware interface. According to another embodiment, the abstraction layer includes a plurality of microkernels, at least one of which operates cooperatively to share resources of the system and form a distributed virtual machine monitor.

According to another embodiment, the at least two of the plurality of microkernels cooperate to present a logical address space to the operating system through a virtual hardware interface. According to another embodiment, the distributed virtual machine monitor is adapted to schedule a plurality of tasks as a plurality of respective threads executed by one or more of the plurality of physical processors. According to another embodiment, the distributed virtual machine monitor is adapted to schedule a plurality of processes as a plurality of respective threads executed by one or more of the plurality of physical processors. According to one embodiment, the plurality of threads share one or more objects via the operating system.

According to one embodiment, the operating system executes on a virtual processor. According to another embodiment, the system further comprises a plurality of nodes, and wherein the processor is located in at least one of the plurality of nodes. According to another embodiment, the abstraction layer defines a plurality of virtual processors, at least two of which are mapped by the abstraction layer to at least two physical processors, respectively, residing within a single node.

According to one embodiment, the abstraction layer comprises a plurality of microkernels, at least two of which operate cooperatively as a cluster. According to another embodiment, the system further comprises a node, and wherein the processor is located in the node. According to another embodiment, a microkernel program is executed by the node. According to another embodiment, the plurality of microkernels form a distributed virtual machine monitor that presents a single hardware interface to the operating system. According to one embodiment, the abstraction layer emulates a processor architecture. According to one embodiment, the processor architecture is an architecture of a virtual processor. According to one embodiment, at least one of a plurality of function calls in the virtual processor architecture are mapped to one or more physical processors.

According to another embodiment, the operating system is adapted to execute on the virtual processor. According to one embodiment, the abstraction layer presents a single virtual system to the operating system, and wherein the abstraction layer maps the virtual system onto one or more of a plurality of physical processors. According to another embodiment, the number of virtual processors is permitted to be at least one of less than or equal to a number of physical processors in the system, and any number in relation to the number of physical processors in the system.

According to one embodiment, the abstraction layer presents to the operating system one or more virtual processors, wherein the one or more virtual processors are mapped onto a plurality of physical processors. According to another embodiment, one or more of the plurality of physical processors are hardware processors that reside within a node. According to another embodiment, one or more virtual processors are associated with a virtual server, and wherein the one or more virtual processors are mapped onto one or more physical processors that reside within at least one of a group comprising a single node and different nodes. According to one embodiment, at least one of the one or more virtual processors is associated with a first virtual server, and another one of the one or more virtual processors is associated with a second virtual server, and wherein the at least one of the virtual processors and the another one of the one or more virtual processors are mapped to respective physical processors that reside within a single node.

According to another embodiment, the abstraction layer is adapted to define a virtual server system comprising one or more virtual processors, and wherein the system further comprises a hierarchical scheduling system that allows a plurality of virtual processors to be shared among the plurality of physical processors. According to another embodiment, the hierarchical scheduling system comprises a first and second scheduler, wherein the operating system includes the first scheduler which schedules at least one task to be performed by the virtual server system, and wherein the distributed virtual machine monitor includes the second scheduler, the second scheduler being associated with the virtual server system and being adapted to schedule the at least one task to be executed by at least one physical processor associated with the virtual server.

According to another embodiment, the system comprises virtual memory shared among the plurality of virtual processors. According to another embodiment, each of the plurality of virtual processors is restricted to use a distributed memory that is mapped onto one or more physical memory locations. According to another embodiment, the abstraction layer presents to the operating system a virtual cache-coherent, non-uniform memory access (NUMA) system. According to one embodiment, the virtual NUMA system comprises a set of virtual processors executing on one or more physical nodes. According to another embodiment, the virtual NUMA system provides access to basic I/O, memory and processor abstractions. According to another embodiment, the abstraction layer presents to the operating system a virtual cache-only memory architecture (COMA). According to another embodiment, the virtual COMA system comprises a set of virtual processors executing on one or more physical nodes. According to another embodiment, the virtual COMA system provides access to basic I/O, memory and processor abstractions. According to one embodiment, the abstraction layer presents to the operating system a virtual uniform memory access (UMA) architecture. According to one embodiment, the virtual UMA system comprises a set of virtual processors executing on one or more physical nodes. According to another embodiment, the virtual NUMA system provides access to basic I/O, memory and processor abstractions.

According to one embodiment, the distributed virtual machine monitor isolates the operating system from one or more physical processors. According to another embodiment, the distributed virtual machine monitor isolates the operating system from a shared virtual memory system. According to another embodiment, at least two of the plurality of microkernels are adapted to communicate using a synchronization protocol. According to another embodiment, at least two of the plurality of microkernels communicate using a cache-only distributed shared memory paging protocol. According to one embodiment, at least two of the plurality of microkernels communicate using a function shipping protocol. According to another embodiment, the function shipping protocol is an object-level function shipping protocol.

According to one embodiment, at least two of the plurality of microkernels communicate using a distributed shared memory protocol and/or a function shipping protocol. According to one embodiment, the function shipping protocol is an object-level function shipping protocol. According to one embodiment, at least two of the plurality of microkernels share objects. According to one embodiment, at least two of the plurality of microkernels share pages. According to one embodiment, at least two of the plurality of microkernels share objects and pages. According to another embodiment, the abstraction layer presents, to one or more operating systems a plurality of virtual processors grouped into one or more virtual multiprocessor systems. According to another embodiment, each of the one or more operating systems are executed by a respective one of the one or more virtual multiprocessor systems. According to another embodiment, the system is adapted to migrate physical processors among the one or more virtual multiprocessor systems. According to another embodiment, the one or more of virtual multiprocessor systems span one or more physical processors. According to another embodiment, at least one virtual multiprocessor system may be configured to include or exclude one or more virtual processors while the virtual multiprocessor system is in an operating mode. According to another embodiment, the at least one memory address space is a physical address space.

According to one aspect of the invention, a computer-readable medium is provided having stored thereon a data structure comprising data mapping a virtual processor to one or more physical processors. According to another aspect of the invention, the system comprises a manager adapted to create an instance of a virtual server, and a resource allocated to the instance of the virtual server, the virtual resource being associated with one or more actual resources. According to one embodiment, the resource includes at least one virtual processor being associated with one or more nodes. According to another embodiment, the virtual server is associated with multiple virtual processors. According to another embodiment, the virtual server presents a single system image while executing across the one or more nodes.

According to one embodiment, the one or more nodes are coupled by an interconnect. According to another embodiment, the interconnect is InfiniBand. According to another embodiment, the interconnect is PCI-Express. According to another embodiment, the interconnect is GigaNet. According to another embodiment, the interconnect is Gigabit Ethernet. According to one embodiment, the interconnect is 10 Gigabit Ethernet. According to one embodiment, the interconnect uses RDMA.

According to one embodiment, the virtual server is adapted to execute an application on the one or more nodes without modification. According to another embodiment, the manager is adapted to perform a mapping between the virtual resource and the one or more actual resources. According to another embodiment, the resource is a virtual network interface, and the actual resource includes an actual network interface. According to another embodiment, the virtual resource is a virtual storage entity, and the actual resource includes an actual storage device. According to one embodiment, the manager is adapted to perform a reallocation of the virtual resource to another virtual server instance.

According to one embodiment, the system further comprises a distributed server that is executed on the one or more nodes. According to another embodiment, the manager is adapted to perform an association between the one or more actual resources and at least one of the distributed server and virtual server. According to another embodiment, the system includes one or more unallocated actual resources, and wherein the manager is adapted to perform an association between the one or more unallocated resources and one or more respective distributed servers or virtual servers. According to another embodiment, the virtual server is associated with a first collection of resources, and wherein the manager is adapted to disassociate the virtual server with the first collection of resources, and wherein the manager is adapted to associate the virtual server with a second collection of resources. According to another embodiment, the second collection of resources is presented to the virtual server by a distributed server. According to another embodiment, the distributed server is executed on by plurality of nodes.

According to one aspect of the invention, a computer system is provided comprising a plurality of processors, and a visualization layer adapted to define one or more virtual servers, at least one of which presents a single computer system interface to an operating system, the single computer system interface defining a plurality of instructions, wherein at least one of the plurality of instructions is directly executed on at least one of the plurality of processors, and at least one other of the plurality of instructions is handled by the virtualization layer. According to one embodiment, the virtualization layer includes a microkernel that executes on at least one processor. According to another embodiment, the at least one of the plurality of instructions is a non-privileged instruction. According to another embodiment, the at least one other of the plurality of instructions is a privileged instruction. According to another embodiment, the virtualization layer includes code that handles a call to the privileged instruction. According to another embodiment, the virtualization layer passes the non-privileged instruction to the at least one of the plurality of processors without intervention.

According to another embodiment,the computer system further comprises a plurality of resources, wherein each of the plurality of processors executes a respective instance of a microkernel program, and wherein each of the respective instances of the microkernel program are adapted communicate to cooperatively share the plurality of resources of the computer system. According to another embodiment, the virtual server includes one or more virtual processors, wherein the virtualization layer is adapted to schedule tasks associated with at least one of the one or more virtual processors as a thread that is executed on at least one of the plurality of processors. According to another embodiment, the virtualization layer is adapted to schedule a plurality of virtual processor tasks for execution substantially in parallel.

According to one embodiment, the computer system further comprises a plurality of resources, wherein at least one of the one or more virtual servers includes at least two virtual interfaces, both of which are adapted to send requests for access to the plurality of resources in parallel. According to another embodiment, at least one of the at least two virtual interfaces includes a virtual network interface. According to another embodiment, at least one of the at least two virtual interfaces includes a virtual storage adapter. According to another embodiment, the virtual storage adapter is a virtual host bus adapter (HBA). According to another embodiment, the computer system further comprises at least one I/O server, wherein the parallel access requests are serviced in parallel by the I/O server. According to another embodiment, the computer system further comprises at least one I/O device, wherein the parallel access requests are serviced in parallel by the I/O device.

According to another embodiment, the parallel access requests are transmitted over a switched communication network. According to another embodiment, the switched communication network includes an InfiniBand switched fabric. According to another embodiment, the parallel access requests are transmitted over a packet-based network. According to another embodiment, the virtualization layer is adapted to map one or more virtual resources to one or more physical resources. According to one embodiment, the one or more physical resources includes at least one of input/output (I/O) devices, processors, interconnects and storage entities.

Further features and advantages of the present invention as well as the structure and operation of various embodiments of the present invention are described in detail below with reference to the accompanying drawings. In the drawings, like reference numerals indicate like or functionally similar elements. Additionally, the left-most one or two digits of a reference numeral identifies the drawing in which the reference numeral first appears.

### BRIEF DESCRIPTION OF DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
Figure 1 is a block diagram of a virtual server architecture according to one embodiment of the present invention;
Figure 2 is a block diagram of a system for providing virtual services according to one embodiment of the present invention;
Figure 3 is a block diagram showing a mapping relation between virtual processors and physical nodes according to one embodiment of the present invention;
Figure 4 is a block diagram showing scheduling of virtual processor tasks according to one embodiment of the present invention;
Figure 5 is a block diagram showing scheduling of virtual processor tasks in accordance with another embodiment of the present invention;
Figure 6 is a block diagram showing an example memory mapping in a virtual server system in accordance with another embodiment of the present invention;
Figure 7 is a block diagram showing an example execution level scheme in accordance with another embodiment of the present invention;
Figure 8 is a block diagram showing an example distributed virtual machine monitor architecture in accordance with another embodiment of the present invention; and
Figure 9 is a block diagram showing an example system architecture upon which a virtual computing system in accordance with another embodiment of the present invention may be implemented.

### Detailed Description

According to one aspect, a horizontal virtualization architecture is provided wherein applications are distributed across virtual servers. In one example system, an application is scaled horizontally across at least one virtual server, comprised of a set of virtual processors, each of which is mapped to one or more physical nodes. From the perspective of the application, the virtual server operates like a shared memory multi-processor, wherein the same portion of the application is located on one or more of the virtual processors, and the multiple portions operate in parallel. The resulting system allows applications and operating systems to execute on virtual servers, where each of these virtual servers span a collection of physical servers (or nodes) transparent to the applications and operating systems. That is, the virtual server presents, to the operating system and application a single system where single instance of an operating system runs. Such a system according to one embodiment is contrasted by conventional clustered computing systems that support single system image as typically understood in the art, in that multiple instances of an operating system are clustered to create an illusion of a single system to the application programmers. Further, such a system according to one embodiment is unlike conventional "grid" computing systems as typically understood in the art, as no application modifications are required for the applications to execute on the virtualization architecture.

Figure 1 shows one example system 101 that may be used to execute one or more data center applications. System 101 may include one or more system layers providing layers of abstraction between programming entities. As discussed above, a virtualization layer 104 is provided that isolates applications on a guest operating system (GOS) operating in layers 102 and 103, respectively, from an underlying hardware layer 105. Such applications may be, for example, any application program that may operate in a data center environment. For instance, a database server application, web-based application, e-mail server, file server, or other application that provides resources to other systems (e.g., systems 107A-107C) may be executed on system 101. Such applications may communicate directly with virtualization layer 104 (e.g., in the case of a database server application, wherein the application is part of the operating system) or may communicate indirectly through operating system layer 103. Virtualization layer 104 in turn maps functions performed by one or more virtual processors to functions performed by one or more physical entities in hardware layer 105. These entities may be, for instance, physical nodes having one or more processors.

In one aspect, virtualization layer 104 presents, to application layer 102 and operating system layer 103 a single system presented in the form of a virtual server. In one embodiment, a single instance of an OS is executed by the virtual server. In particular, a distributed virtual machine monitor creates a single system image, upon which a single instance of a virtual server is executed. The virtual server acts as a single system, executing a single instance of the OS. This architecture contrasts to conventional clustering systems where multiple OS entities executing on multiple systems cooperate to present a single system (e.g., to an application programmer that develops programs to be executed on a clustered OS). According to another embodiment of the present invention, this virtual server includes one or more constructs similar to a physical server (storage, memory, I/O, networking), but these constructs are virtual and are mapped by virtualization layer 104 to one or more hardware entities.

Physical entities may communicate with each other over an interconnect (not shown) for the purpose of sharing access to resources within hardware layer 105. For instance, a distributed memory architecture may be used to allow hardware devices (e.g., nodes to share other non-local memory. Other hardware entities (e.g., network, storage, I/O, etc.) may also be shared by nodes through an interconnect.

System 101 may be coupled to one or more external communication networks (e.g., network 106) for the purpose of sharing resources with one or more systems (e.g., systems 107A-107C). System 101 may function as part of an overall computing system 100 to perform one or more tasks. For instance, system 100 may function as a client-server, n-tiers, or other type of architecture that executes one or more applications in a cooperative system. It should be appreciated that system 100 may include any number and type of computing systems, architecture, application, operating system or network, and the invention is not limited to any particular one(s).

### Example Architecture

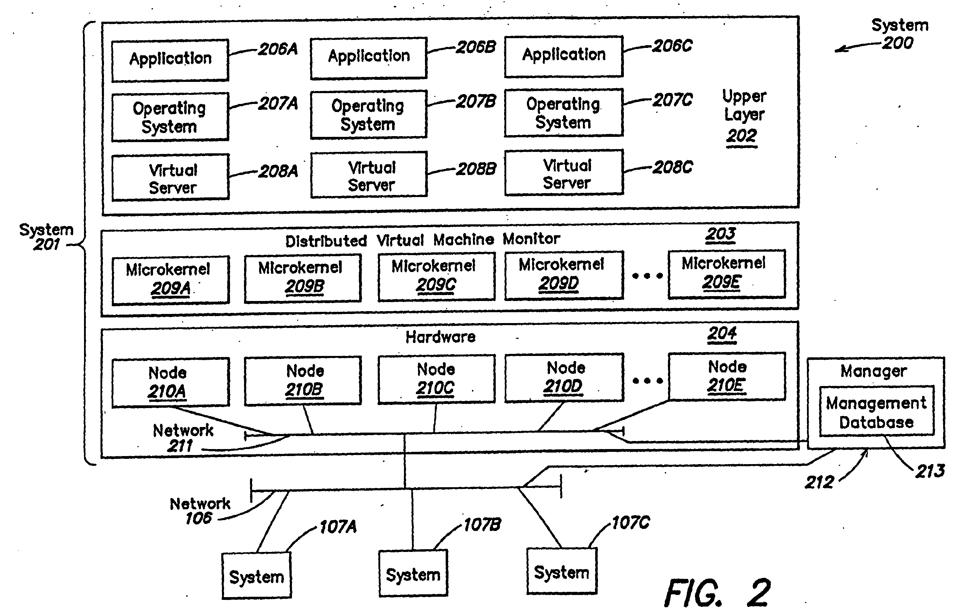

Figure 2 shows an example architecture of a system 201 according to one embodiment of the invention. System 201 includes an upper layer 202 including one or more operating systems 207A-207C executed by one or more virtual servers 208A-208C, respectively. According to one embodiment, virtual servers 208A-208C present, to their respective operating systems 207A-207C, single system regardless of the number of hardware nodes (e.g., nodes 210A-210D) included in a particular virtual server.

Operating systems 207A-207C may be, for example, commodity operating systems that may be ported to a Virtual Machine Architecture (VMA) presented by a distributed virtual machine monitor. A virtual server may be an instance of an architecture presented by a virtualization layer (e.g., layer 104). A virtual server may have a persistent identity and defined set of resource requirements (e.g., storage, memory, and network) resource access privileges, and/or resource limits.

Distributed virtual machine monitor (or DVMM) 203 provides an abstraction layer for mapping resources presented by each virtual server to other upper layer 202 programs to underlying hardware 204. In one embodiment, DVMM 203 includes one or more microkernel 209A-209E, each of which are pseudo-machines, each of which runs on a single node and manages the resources associated with that node. Each microkemel 209A-209E may include a virtual memory which it manages, this memory space spanning one or more portions of available physical memory associated with participating nodes.

Hardware layer 204 may include, for example, one or more nodes 210A-210E coupled by a network 211. These nodes may be, for example, general-purpose processing systems having one or more physical processors upon which tasks are performed.

According to one embodiment, an organizational concept of a frame may be defined, the frame identifying a set of nodes and other hardware entities that may be used to operate as an organizational unit. Elements within the frame may be capable of communicating between each other over a network 211. In one example, network 211 may include a low-latency high-bandwidth communication facility (e.g., InfiniBand, PCI-Express, GigiNet, Ethernet, Gigabit Ethernet, 10 Gigabit Ethernet, etc.). Network 211 may also include one or more elements (e.g., switching or routing elements) that create an interconnected frame.

In one embodiment, nodes (e.g., nodes 210A-210E) are restricted to participating in one and only one frame. A defined frame and its associated hardware may be associated with a distributed server, and the entities of that frame may perform the physical operations associated with that virtual distributed server.

In one embodiment, a distributed server is a collection of software and hardware components. For example, hardware components may include commodity servers coupled to form a cluster. Software associated with each distributed server runs on this cluster and presents a multi-processor system architecture two upper layers, defining a virtual server that is capable of hosting a guest operating system (GOS). Components of a distributed server may include a distributed virtual machine monitor program, interconnects, processors, memory, I/O devices and software and protocols used to bind them. A guest operating system (GOS), such as, for example, UNIX (e.g., Linux, SUSE, etc.), Microsoft Windows Server, or other operating system executes upon the virtual server. In one embodiment, the guest operating system operates as if it was running on a non-cluster multi-processor system having coherent shared memory.

System 201 may also include a manager 212 that manages the configuration of system 201. Manager 212 may include an associated management database 213 that stores information relating to the configuration of system 201. Manager 212 may also communicate with a management agent (not shown) executed by one or more virtual servers of system 201 for the purpose of performing configuration changes, monitoring performance, and performing other administrative functions associated with system 201. The following section discusses an example management architecture for managing a virtual computing architecture, and various advantages of a scalable virtual computing system according to various embodiments of the present invention.

### Management Architecture

As discussed above, the virtualization architecture allows for an expansion (or a contraction) of resources used by an executing virtual computing system. Such expansion or contraction may be needed from time to time as customer and business needs change. Also, applications or the operating systems themselves may need additional (or less) resources as their requirements change (e.g., performance, loading, etc.). To this end, a capability may be provided for changing the amount and allocation of resources, both actual and virtual, to the virtual computing system. More specifically, additional resources (e.g., nodes, network, storage, I/O, etc.) may be allocated (or deallocated) in real time to a frame and these resources may then be used (or not used) by a distributed server. Similarly, virtualized resources (e.g., virtual processors, virtual I/O, virtual networking, etc.) as well as physical resources may be allocated or deallocated to a virtual server. In this manner, the virtual computing system may be scaled up/scaled down as necessary.

The ability for allocating or deallocating resources may be provided using, for example, manager 212 and one or more management agents. Such a system is described with more particularity in the co-pending U.S. patent application filed April 26, 2004 entitled "METHOD AND APPARATUS FOR MANAGING VIRTUAL SERVERS" under Attorney Docket Number K2000-700100, which is incorporated by reference in its entirety.

According to one aspect of the present invention, a management capability is provided for a virtual computing platform. This platform allows scale up and scale down of virtual computing systems, and such a management capability provides for control of such scale up and scale down functions. For instance, a capability is provided to allocate and/or deallocate resources (e.g., processing, memory, networking, storage, etc.) to a virtual computing system. Such control may be provide, for example, to an administrator through an interface (e.g., via a CLI, or GUI) or to other programs (e.g., via a programmatic interface).

According to one aspect of the present invention, an interface is provided that allows for the addition or removal of resources during the execution of a virtual computing system. Because resource allocation may be changed without restarting the virtual computing system, a flexible tool is provided for administrators and programs for administering computing resources.

In the case where such a virtual computing system is provided in a datacenter, an administrator may be capable of provisioning resources in real time to support executing virtual servers. Conventionally, data center server resources are hard-provisioned, and typically require interruption of server operation for resources to be changed (e.g., change in memory, network, or storage devices).

According to one embodiment of the present invention, a virtual computing system is provided that allows a network administrator to provision computing resources in real-time ("on-the-fly") without a restart of a virtual computing system. For instance, the administrator may be presented an interface through which resources may be allocated to a virtual server (e.g., one that emulates a virtual multiprocessor computer). The interface may display a representation of an allocation of physical resources and mapping to virtual resources used by a virtual server. For example, the interface may provide an ability to map virtual servers to sets of physical resources, such as a virtual processor that is mapped to a physical processor.

According to another embodiment, a capability is provided to allocate and/or deallocate resources (e.g., processing, memory, networking, storage, etc.) to a virtual computing system. Such control may be provide, for example, to an administrator through an interface (e.g., via a CLI, or GUI) or to other programs (e.g., via a programmatic interface). According to another embodiment, an interface is provided that allows for the addition or removal of resources during the execution of a virtual computing system. Because resource allocation may be changed without restarting the virtual computing system, a flexible tool is provided for administrators and programs for administering computing resources. This tool permits an administrator to grow or shrink the capabilities of a virtual server system graphically or programmatically.

For instance, the administrator may be presented an interface through which resources may be allocated to a virtual server (e.g., one that emulates a virtual multiprocessor computer). The interface may display a representation of an allocation of physical resources and mapping to virtual resources used by a virtual server. For example, the interface may provide an ability to map virtual servers to sets of physical resources, such as a virtual processor that is mapped to a physical processor. In one embodiment, a virtual server can span a collections of a physical nodes coupled by an interconnect. This capability allows, for example, an arbitrarily-sized virtual multiprocessor system (e.g., SMP, Numa, ASMP, etc.) to be created.

Such capabilities may be facilitated by a management agent and server program that collectively cooperates to control configuration of the virtual and distributed servers. According to one embodiment, the management server writes information to a data store to indicate how each node should be configured into virtual and distributed servers. Each management agent may then read the data store to determine its node's configuration. The configuration may be, for example, pushed to a particular management agent, pulled from the management server by the management agent, or a combination of both techniques. The management agent may pass this information to its distributed virtual machine monitor program which uses the information to determine the other nodes in its distributed server with whom it is tasked to cooperatively execute a set of virtual servers.

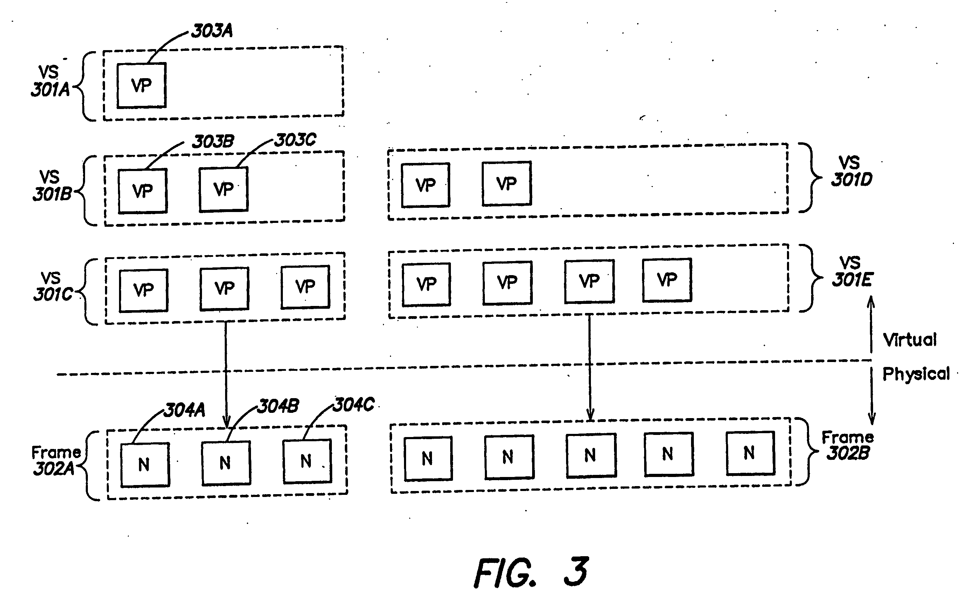

An administrator or other program may, using one or more interfaces (e.g., UI, CLI, programmatic, etc.) to allocate or deallocate resources to virtual servers or distributed servers. More particularly, the interface may allow an administrator or program to associate a hardware resource (e.g., an I/O device, network interface, node having one or more physical processors, etc.) to a distributed server of a frame. As discussed further below with reference to Figure 3, a frame (e.g., frame 302A, 302B) may define a partitioned set of hardware resources, each of which sets may form multiple distributed servers, each of which sets may be associated with one or more virtual servers. Alternatively, a hardware resource may be allocated directly to a virtual server.

A hardware device may be unassigned to a particular distributed server within a frame in which the hardware device is coupled, for example, during initial creation of the distributed server (e.g., with unassigned resources), by adding new hardware to the frame, or by virtue of having previously unassigning the hardware resource to a distributed server or virtual server. Such unassigned resources may be, for example, grouped into a "pool" of unassigned resources and presented to an administrator or program as being available for assignment. Once assigned, the virtual computing system may maintain a representation of the assignment (or association) in a data structure (e.g., in the data store described above) that relates the hardware resource to a particular distributed server or virtual server.

Once an actual resource (e.g., hardware) is assigned, virtual resources associated with the hardware resource may be defined and allocated to virtual servers. For instance, one or more VNICs (virtual network interface cards) may be defined that can be backed by one or more actual network interface devices. Also, a new node may be assigned to a partition upon which a virtual server is executed, and any CPUs of the newly-assigned nodes may be assigned as additional virtual processors (VPs) to the virtual server.

In one example, the management server may use an object model to manage components (e.g., resources, both physical and virtual) of the system. Manageable objects and object collections may be defined along with their associations to other manageable objects. These objects may be stored in a data structure and shared with other management servers, agents, or other software entities. The management architecture may implement a locking mechanism that allows orderly access to configurations and configuration changes among multiple entities (administrators, programs, etc.).

According to one embodiment, a management agent at each node interacts with the distributed virtual machine monitor program and with outside entities, such as, for example, a management server and a data store. In one example, the management server provides command and control information for one or more virtual server systems. The management agent acts as the distributed virtual machine monitor program tool to communicate with the management server, and implement the actions requested by the management server. In one example, the management agent is a distributed virtual machine monitor user process. According to another embodiment, the data store maintains and provides configuration information upon demand. The data store may reside on the same or different node as the management server, or may be distributed among multiple nodes.

The management agent may exist within a constrained execution environment, such that the management agent is isolated from both other virtual server processes as well as the distributed virtual machine monitor program. That is, the management agent may not be in the same processor protection level as the rest of the distributed virtual machine monitor program. Alternatively, the management agent may operate at the same level as the distributed virtual machine monitor program or may form an integral part of the distributed virtual machine monitor program. In one embodiment, the management agent may be responsible for a number of tasks, including configuration management of the system, virtual server management, logging, parameter management, and event and alarm propagation.

According to one embodiment, the distributed virtual machine monitor management agent may be executed as a user process (e.g., an application on the virtual server), and therefore may be scheduled to be executed on one or more physical processors is similar to an application. Alternatively, the management agent may be executed as an overhead process at a different priority than an application. However, it should be appreciated that the management agent may be executed at any level of a virtual computing system hierarchy and at any protection or priority level.

According to one embodiment, interactions between the management agent and the management server may be categorized as either command or status interactions. According to one embodiment, commands originate with the management server and are sent to the management agent. Commands include, but are not limited to, distributed server operations, instructions to add or remove a node, processor, memory and/or I/O device, instructions to define or delete one or more virtual servers, a node configuration request, virtual server operations, status and logging instructions, heartbeat messages, alert messages, and other miscellaneous operations. These commands or status interactions may be transmitted, for example, using one or more communication protocols (e.g., TCP, UDP, IP or others). It should be appreciated that the virtual computing platform may be managed using a different architecture, protocols, or methods, and it should be understood that the invention is not limited to any particular management architecture, protocols, or methods.

### Mapping of Virtual Servers

Figure 3 shows in more detail an example mapping of one or more virtual servers to a grouping of hardware referred to hereinafter as a partition according to one embodiment of the invention. A collection of one or more virtual processors is arranged in a set. In one embodiment, a virtual server (VS) may be viewed as a simple representation of a complete computer system. A VS, for example, may be implemented as a series of application programming interfaces (APIs). An operating system is executed on a virtual server, and a distributed virtual machine monitor may manage the mapping of VPs onto a set of physical processors. A virtual server (e.g., VS 301A-301E) may include one or more VPs (e.g., 303A-303C), and the number of VPs in a particular VS may be any number.

Hardware nodes and their associated resources are grouped together into a set referred to herein as a frame. According to one embodiment, a virtual server is associated with a single frame, and more than one virtual server may be serviced by a frame. In the physical realm, nodes (e.g., nodes 304A-304C) may be associated with a particular frame (e.g., frame 302A). In one example, a frame (e.g., frame 302A, 302B) may define a partitioned set of hardware resources, each of which sets may form multiple distributed servers, each of which sets may be associated with one or more virtual servers. In one embodiment, virtual processors are mapped to physical processors by the distributed virtual machine monitor. In one embodiment, there may be a one-to-one correspondence between virtual processors and physical processors. Nodes within a frame may include one or more physical processors upon which virtual processor tasks may be scheduled. Although several example mappings are shown, it should be appreciated that the invention is not limited to the shown mappings. Rather, any mapping may be provided that associates a virtual server to a frame.

However, there may be configurations that are not allowed for reasons having to do with security, performance, or other reasons. For instance, according to one embodiment, mapping of a virtual server to more than one frame may not be permitted (e.g., nodes outside of a frame are not connected to the internal frame interconnect). Other configurations may not be permitted based on one or more rules. For instance, in one example, a physical processor may not be permitted to be allocated to more than one distributed server. Also, the number of active physical processors in use may not be permitted to be less than the number of virtual processors in the virtual processing system. Other restriction rules may be defined alone or in combination with other restriction rules.

### Scheduling

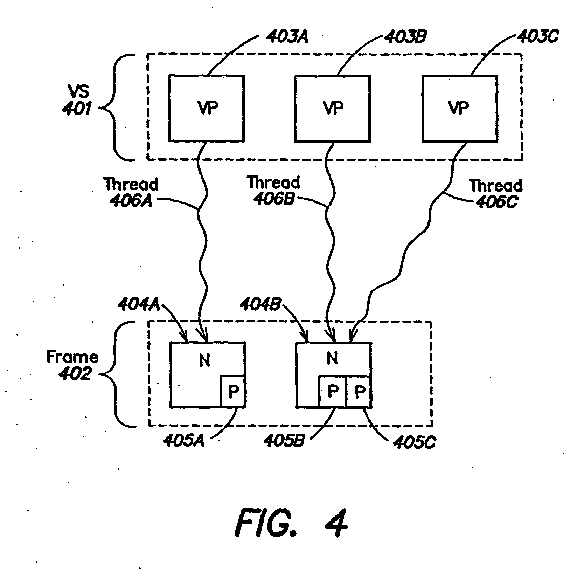

Figure 4 shows an example scheduling relation between virtual processors and physical processors according to one embodiment of the invention. As shown, virtual server 401 includes two virtual processors VP 403A-403B. Each of these VPs are mapped to nodes 404A-404B, respectively in frame 402. Node 404A may include one processor 405A upon which a task associated with VP 403A may be scheduled.

There may be a scheduler within the distributed virtual machine monitor that handles virtual processor scheduling. In one example, each virtual processor is mapped to one process or task. The scheduler may maintain a hard affinity of each scheduled process (a VP) to a real physical processor within a node. According to one embodiment, the distributed virtual machine monitor may execute one task per virtual processor corresponding to its main thread of control. Tasks in the same virtual server may be simultaneously scheduled for execution.

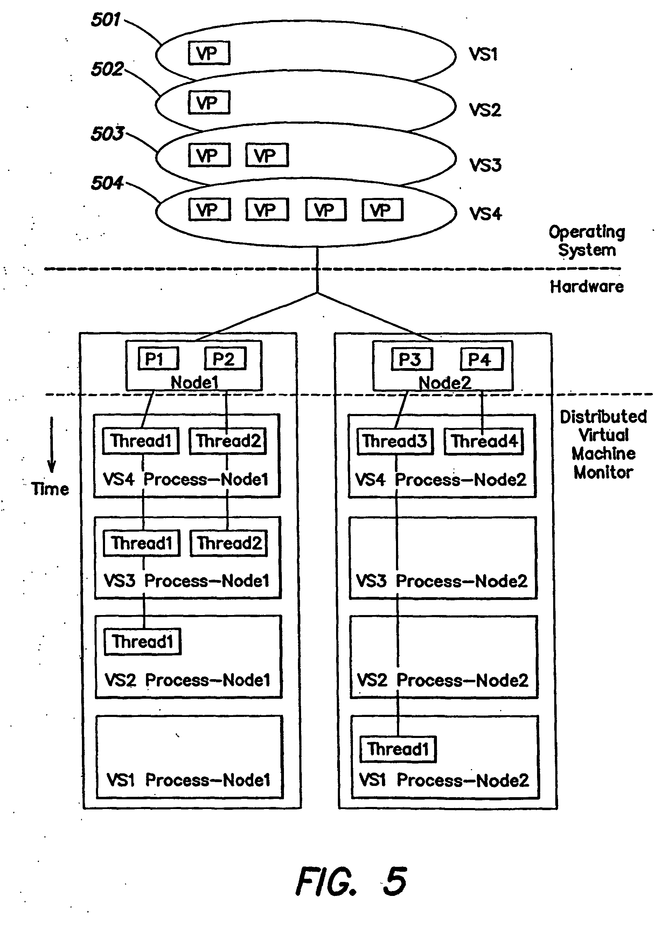

Figure 5 shows a more detailed example showing how virtual server processes may be scheduled according to one embodiment of the present invention. In the example, there are four virtual servers, VS1 (item 501), VS2 (item 502), VS3 (item 504), and VS4 (item 505) defined in the system. These virtual servers have one or more virtual processors (VPs) associated with them.

These four virtual processors are mapped to two nodes, each of which nodes includes two physical processors, P1-P4. The distributed virtual machine monitor maps each virtual server to an individual process. Each virtual processor (VP) within a virtual server is a thread within this process. These threads may be, for example, bound via hard affinity to a specific physical processor. To the distributed virtual machine monitor, each of the virtual servers appears as a process running at a non-privileged level. Each of the individual virtual processors included in a virtual server process are component threads of this process and may be scheduled to run on a separate, specific physical processor.

With the example configuration having two dual processor nodes (four physical processors total), in one embodiment of the invention there may be up to a maximum of four VPs created in any virtual server. Also, with a total number of eight VPs, there are eight threads. As shown in Figure 5, the distributed virtual machine monitor may run each virtual server process at approximately the same time (e.g., for performance reasons as related processes running at different times may cause delays and/or issues relating to synchronization). That is, the VS4 processes are scheduled in one time slot, VS3 processes in the next, and so forth. There may be "empty" processing slots in which management functions may be performed or other overhead processes. Alternatively, the scheduler may rearrange tasks executed in processor slots to minimize the number of empty processor slots.

Further, the scheduler may allow for processors of different types and/or different processing speeds to perform virtual server tasks associated with a single virtual server. This capability allows, for example, servers having different processing capabilities to be included in a frame, and therefore is more flexible in that an administrator can use disparate systems to construct a virtual computing platform. Connections between different processor types are facilitated, according to one embodiment, by not requiring synchronous clocks between processors.

### Memory

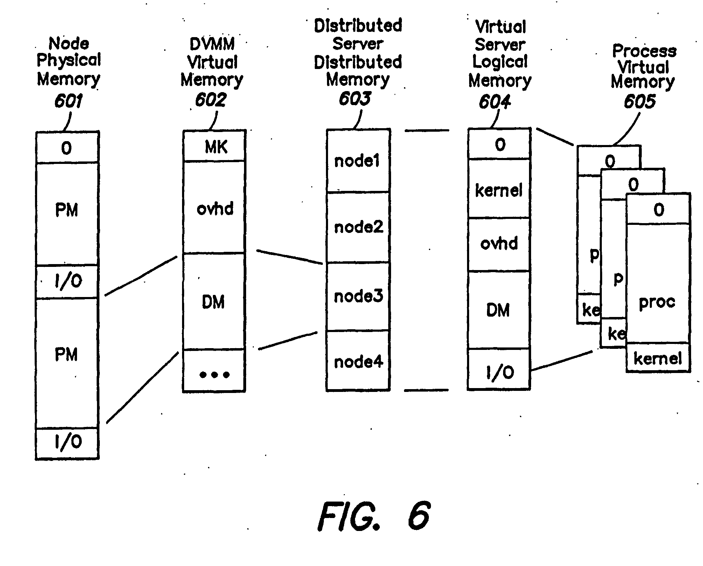

Figure 6 shows a block diagram of a memory mapping in a virtual computer system according to one embodiment of the invention. In general, the distributed virtual machine monitor may make memory associated with hardware nodes available to the guest operating system (GOS) and its applications. The distributed virtual machine monitor (DVMM), through a virtual machine architecture interface (hereinafter referred to as the VMA), offers access to a logical memory defined by the distributed virtual machine monitor and makes available this memory to the operating system and its applications.

According to one embodiment, memory is administered and accessed through a distributed memory manager (DMM) subsystem within the distributed virtual machine monitor. Memory may, therefore, reside on more than one node and may be made available to all members of a particular virtual server. However, this does not necessarily mean that all memory is distributed, but rather, the distributed virtual machine monitor may ensure that local memory of a physical node is used to perform processing associated on that node. In this way, local memory to the node is used when available, thereby increasing processing performance. One or more "hint" bits may be used to specify when local memory should be used, so that upper layers (e.g., virtual layers) can signal to lower layers when memory performance is critical.

Referring to Figure 6 and describing from left to right, a node's physical memory 601 may be arranged as shown in Figure 6, where a portion of the node's physical memory is allocated to virtual memory 602 of the distributed virtual machine monitor memory. As shown, distributed memory associated with the node may be part of a larger distributed memory 603 available to each distributed server. Collectively, the distributed memories of each node associated with the distributed server may be made available to a virtual server as logical memory 604 and to the operating system (GOS), as if it were a physical memory. Memory 604 is then made available (as process virtual memory 605) to applications.

GOS page table manipulation may, for example, be performed by the distributed virtual machine monitor in response to GOS requests. Because, according to one embodiment, the GOS is not permitted direct access to page tables to ensure isolation between different virtual servers, the distributed virtual machine monitor may be configured to perform page table manipulation. The distributed virtual machine monitor may handle all page faults and may be responsible for virtual address spaces on each virtual server. In particular, the DMM subsystem of the distributed virtual machine monitor (DVMM) may perform operations on page tables directly.

Memory operations that may be presented to the operating system through the virtual machine architecture (VMA). According to one embodiment of the present invention, the VMA may include memory operations that are similar in function to that of conventional architecture types (e.g., Intel). In this manner, the amount of effort needed to port a GOS to the VMA is minimized. However, it should be appreciated that other architecture types may be used.

In the case where the architecture is an Intel-based architecture, memory operations that may be presented include management of physical and logical pages, management of virtual address spaces, modification of page table entries, control and modification of base registers, management of segment descriptors, and management of base structures (e.g., GDT (global descriptor table), LDT (local descriptor table), TSS (task save state) and IDT (interrupt dispatch table)).

According to one embodiment, access to such memory information may be isolated. For instance, access to hardware tables such as the GDT, LDT, and TSS may be managed by the VMA. More particularly, the VMA may maintain copies of these tables for a particular virtual server (providing isolation), and may broker requests and data changes, ensuring that such requests and changes are valid (providing additional isolation). The VMA may provide as a service to the GOS access to instructions and registers that should not be accessed at a privileged level. This service may be performed by the VMA, for example, by a function call or by transferring data in a mapped information page.

It can be appreciated that although the VMA may expose logical memory to the GOS, actual operations may be performed on memory located in one or more physical nodes. Mapping from virtual to logical memory may be performed by the VMA. For instance, a virtual address space (or VAS) may be defined that represents a virtual memory to logical memory mapping for a range of virtual addresses.

Logical memory may be managed by the GOS, and may be allocated and released as needed. More particularly, the GOS may request (e.g., from the VMA) for an address space to be created (or destroyed) through the VMA, and the DMM subsystem of the DVMM may perform the necessary underlying memory function. Similarly, the VMA may include functions for mapping virtual addresses to logical addresses, performing swapping, perform mapping queries, etc.

Remote Direct Memory Access (RDMA) techniques may also be used among the nodes to speed memory access among the nodes. Remote Direct Memory Access (RDMA) is a well-known network interface card (NIC) feature that lets one computer directly place information into the memory of another computer. The technology reduces latency by minimizing demands on bandwidth and processing overhead.

### Input/Output

Regarding I/O, the VMA may provide isolation between the GOS and distributed virtual machine monitor. According to one embodiment of the present invention, the VMA functions as a thin conduit positioned between the GOS and a DVMM I/O subsystem, thereby providing isolation. In one embodiment, the GOS is not aware of the underlying hardware I/O devices and systems used to support the GOS. Because of this, physical I/O devices may be shared among more than one virtual server.

In one implementation, GOS drivers associated with I/O may be modified to interface with the VMA. Because the size of the distributed virtual machine monitor should, according to one embodiment, be minimized, drivers and changes may be made in the GOS, as there is generally more flexibility in changing drivers and configuration in the GOS than the distributed virtual machine monitor.

I/O functions that may be performed by the distributed virtual machine monitor in support of the GOS may include I/O device configuration and discovery, initiation (for both data movement and control), and completion. Of these types, there may be varying I/O requests and operations specific to each type of device, and therefore, there may be one or more I/O function codes that specify the functions to be performed, along with a particular indication identifying the type of device upon which the function is performed. I/O support in the VMA may act as a pipe that channels requests and results between the GOS and underlying distributed virtual machine monitor subsystem.

I/O devices that may be shared include, for example, FibreChannel, InfiniBand and Ethernet. In hardware, I/O requests may be sent to intelligent controllers (referred to hereinafter as I/O controllers) over multiple paths (referred to as multipathing). I/O controllers service the requests by routing the request to virtual or actual hardware that performs the I/O request possibly simultaneously on multiple nodes (referred to as multi-initiation), and returns status or other information to the distributed virtual machine monitor.

In one example I/O subsystem, the distributed virtual machine monitor maintains a device map that is used to inform the GOS of devices present and a typing scheme to allow access to the devices. This I/O map may be an emulation of a bus type similar to that of a conventional bus type, such as a PCI bus. The GOS is adapted to identify the device types and load the appropriate drivers for these device types. Drivers pass specific requests through the VMA interface, which directs these requests (and their responses) to the appropriate distributed virtual machine monitor drivers.

The VMA configuration map may include, for example, information that allows association of a device to perform an operation. This information may be, for example, an index/type/key information group that identifies the index of the device, the device type, and the key or instance of the device. This information may allow the GOS to identify the I/O devices and load the proper drivers.

Once the GOS has determined the I/O configuration and loaded the proper drivers, the GOS is capable of performing I/O to the device. I/O initiation may involve the use of the VMA to deliver an I/O request to the appropriate drivers and software within the distributed virtual machine monitor. This may be performed, for example, by performing a call on the VMA to perform an I/O operation, for a specific device type, with the request having device-specific codes and information. The distributed virtual machine monitor may track which I/O requests have originated with a particular virtual server and GOS. I/O commands may be, for example, command/response based or may be performed by direct CSR (command status register) manipulation. Queues may be used between the GOS and distributed virtual machine monitor to decouple hardware from virtual servers and allow virtual servers to share hardware I/O resources.

According to one embodiment of the present invention, GOS drivers are virtual port drivers, presenting abstracted services including, for example, send packet/get packets functions, and write buffer/read buffer functions. In one example, the GOS does not have direct access to I/O registers. Higher level GOS drivers, such as class drivers, filter drivers and file systems utilize these virtual ports.

In one embodiment of the present invention, three different virtual port drivers are provided to support GOS I/O functions: console, network and storage. These drivers may be, for example, coded into a VMA packet/buffer interface, and may be new drivers associated with the GOS. Although a new driver may be created for the GOS, above the new driver the GOS kernel does not access these so called "pass-through" virtual port drivers and regular physical device drivers as in conventional systems. Therefore, virtual port drivers may be utilized within a context of a virtual system to provide additional abstraction between the GOS and underlying hardware.

According to another embodiment, the use of virtual port drivers may be restricted to low-level drivers in the GOS, allowing mid-level drivers to be used as is (e.g., SCSI multi-path drivers). With respect to the I/O bus map, virtual port drivers are provided that present abstracted hardware vs. real hardware, allowing the system (e.g., the distributed virtual machine monitor) to change the physical system without changing the bus map. Therefore, the I/O bus map has abstraction as the map represents devices in an abstract sense, but does not represent the physical location of the devices. For example, in a conventional PC having a PCI bus and PCI bus map, if a board in the PC is moved, the PCI map will be different. In one embodiment of the present invention, a system is provided wherein if the location of a physical device changes, the I/O map presented to higher layers (e.g., application, GOS) does not change. This allows, for example, hardware devices/resources to be removed, replaced, upgraded, etc., as the GOS does not experience a change in "virtual" hardware with an associated change in actual hardware.

### Example I/O Function

The following is an example of an I/O function performed in a virtual server as requested by a GOS (e.g., Linux). The I/O function in the example is initially requested of the Guest Operating System. For instance, a POSIX-compliant library call may invoke a system service that requests an I/O operation.

The I/O operation passes through a number of layers including, but not limited to:
- Common GOS I/O processing. A number of common steps might occur including request aggregation, performance enhancements and other I/O preprocessing functions. The request may be then passed to a first driver level referred to as an "Upper Level" driver.
- "Upper Level" drivers that are not in direct hardware contact, but provide support for a particular class of devices. The request is further processed here and passed on to Lower Level drivers.
- " Lower Level" drivers are in direct hardware contact. These drivers are specific to a virtual server and are modified to work in direct contact with the VMA I/O interface as discussed above. These drivers process the request and pass the request to the VMA I/O component as if the I/O component was a specific hardware interface.
- The VMA I/O component routes the request to the proper distributed virtual machine monitor (DVMM) drivers for processing.
- The DVMM I/O layer now has the request and processes the request as needed. In this example, a set of cooperating drivers moves the request onto network drivers (e.g., InfiniBand drivers) and out onto the hardware.

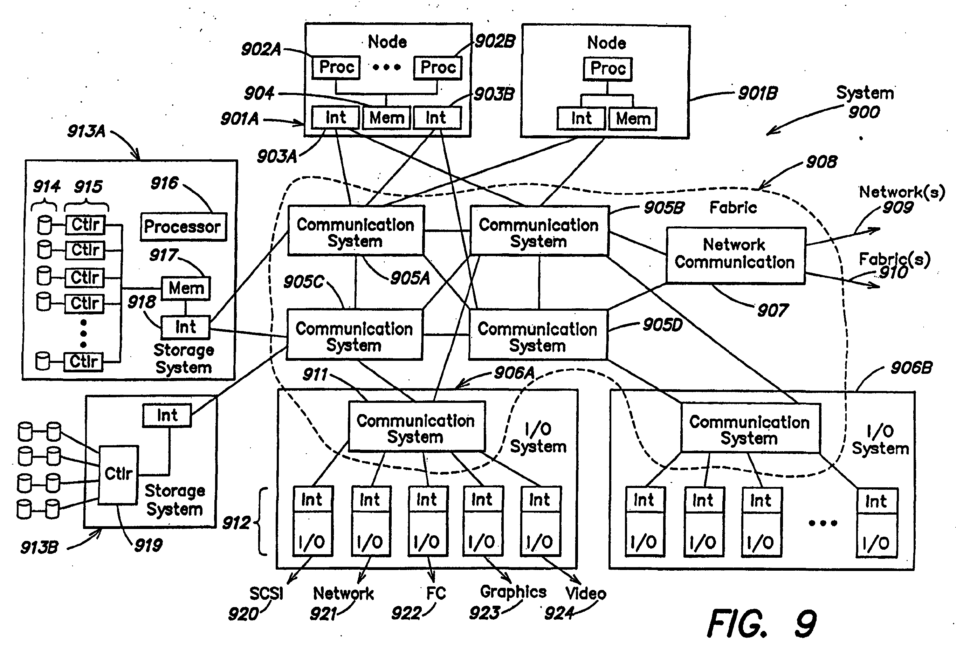

In a virtual server according to one embodiment, all processors may initiate and complete I/O operations concurrently. All processors are also capable of using multipath I/O to direct I/O requests to the proper destinations, and in turn each physical node can initiate its own I/O requests. Further, the network (e.g., an interconnect implementing InfiniBand) may offer storage devices (e.g., via FibreChannel) and networking services (e.g., via IP) over the network connection (e.g., an InfiniBand connection). This set of capabilities provides the distributed virtual machine monitor, and therefore, virtual servers, with a very high performance I/O system. An example architecture that shows some of these concepts is discussed further below with reference to Figure 9.

### Interrupts and Exceptions

Other interfaces to the GOS may also provide additional isolation. According to one aspect of the present invention, interrupts and exceptions may be isolated between the GOS and distributed virtual machine monitor (DVMM). More particularly, interrupts and exceptions may be handled, for example, by an interface component of the VMA that isolates the GOS from underlying interrupt and exception support performed in the DVMM. This interface component may be responsible for correlation and propagation of interrupts, exceptions, faults, traps, and abort signals to the DVMM. A GOS may be allowed, through the VMA interface, to set up a dispatch vector table, enable or disable specific event, or change the handler for specific events.

According to one embodiment, a GOS may be presented a typical interface paradigm for interrupt and exception handling. In the case of an Intel-based interface, an interrupt dispatch table (IDT) may be used to communicate between the GOS and the DVMM. In particular, an IDT allows the distributed virtual machine monitor to dispatch events of interest to a specific GOS executing on a specific virtual server. A GOS is permitted to change table entries by registering a new table or by changing entries in an existing table. To preserve isolation and security, individual vectors within the IDT may remain writeable only by the distributed virtual machine monitor, and tables and information received from the GOS are not directly writable. In one example, all interrupts and exceptions are processed initially by the distributed virtual machine monitor.

As discussed above, a virtual machine architecture (VMA) may be defined that is presented as an abstraction layer to the GOS. Any OS (e.g., Linux, Windows, Solaris, etc.) may be ported to run on a VMA in the same manner as would be performed when porting the OS to any other architecture (e.g., Alpha, Intel, MIPS, SPARC, etc.). According to one aspect of the present invention, the VMA presented to the GOS may be similar to an Intel-based architecture such as, for example, IA-32 or IA-64.

In an example VMA architecture, non-privileged instructions may be executed natively on an underlying hardware processor, without intervention. In instances when privileged registers or instructions must be accessed, the distributed virtual machine monitor may intervene. For examples, in cases where there are direct calls from the operating system, trap code in the VMA may be configured to handle these calls. In the case of exceptions (unexpected operations) such as device interrupts, instruction traps, page faults or access to a privileged instruction or register may cause an exception. In one example, the distributed virtual machine monitor may handle all exceptions, and may deliver these exceptions to the GOS via a VMA or may be handled by the VMA.

### Execution Privilege Levels

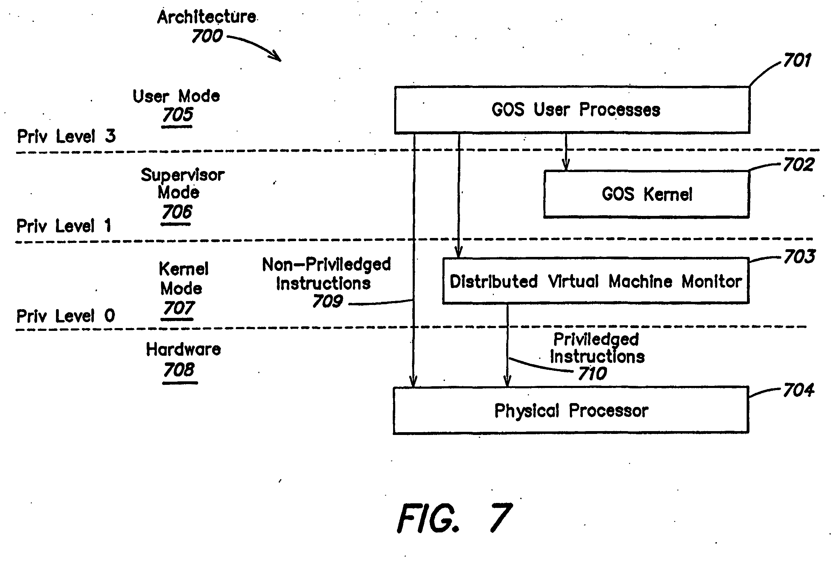

Figure 7 shows an execution architecture 700 according to one aspect of the invention. In particular, architecture 700 includes a number of processor privilege levels at which various processes may be executed. In particular, there is defined a user mode level 705 having a privilege level of three (3) at which user mode programs (e.g., applications) are executed. At this level, GOS user processes 701 associated with one or more application programs are executed. Depending on the access type requested, user processes 701 may be capable of accessing one or more privilege levels as discussed further below.

There may also be a supervisor mode 706 that corresponds to a privilege level one (1) at which the GOS kernel (item 702) may be executed. In general, neither the GOS nor user processes are provided access to the physical processor directly, except when executing non-privileged instructions 709. In accordance with one embodiment, non-privileged instructions are executed directly on the hardware (e.g., a physical processor 704 within a node). This is advantageous for performance reasons, as there is less overhead processing in handling normal operating functions that may be more efficiently processed directly by hardware. By contrast, privileged instructions may be processed through the distributed virtual machine monitor (e.g., DVMM 703) prior to being serviced by any hardware. In one embodiment, only the DVMM is permitted to run at privilege level 0 (kernel mode) on the actual hardware. Virtual server isolation implies that the GOS cannot have uncontrolled access to any hardware features (such as CPU control registers) nor to certain low-level data structures (such as, for example, paging directories/tables and interrupt vectors).

In the case where the hardware is the Intel IA-32 architecture, there are four processor privilege levels. Therefore, the GOS (e.g., Linux) may execute at a level higher than kernel mode (as the distributed virtual machine monitor, according to one embodiment, is only permitted to operate in kernel mode). In one embodiment, the GOS kernel may be executed in supervisor mode (privilege level 1) to take advantage of IA-32 memory protection hardware to prevent applications from accessing pages meant only for the GOS kernel. The GOS kernel may "call down" into the distributed virtual machine monitor to perform privileged operations (that could affect other virtual servers sharing the same hardware), but the distributed virtual machine monitor should verify that the requested operation does not compromise isolation of virtual servers. In one embodiment of the present invention, processor privilege levels may be implemented such that applications, the GOS and distributed virtual machine monitor are protected from each other as they reside in separate processor privilege levels.

Although the example shown in Figure 7 has four privilege levels, it should be appreciated that any number of privilege levels may be used. For instance, there are some architecture types that have two processor privilege levels, and in this case, the distributed virtual machine monitor may be configured to operate in the supervisor mode (privilege level (or ring) 0) and the user programs and operating system may be executed at the lower privilege level (e.g., level 1). It should be appreciated that other privilege scenarios may be used, and the invention is not limited to any particular scenario.

### Example Distributed Virtual Machine Monitor Architecture

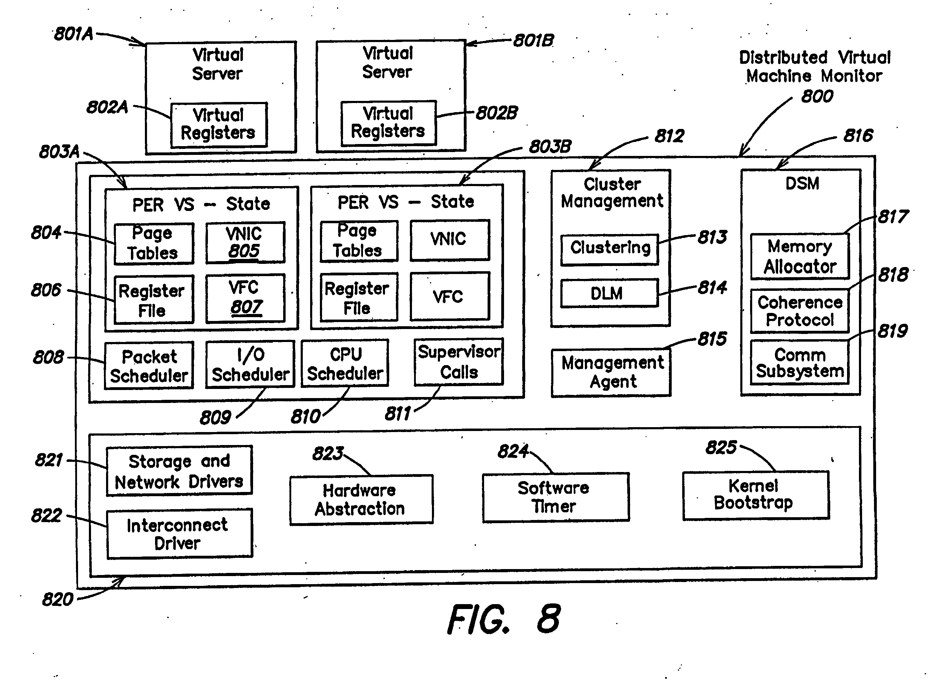

Figure 8 shows an example of a DVMM architecture according to one embodiment of the present invention. As discussed above, the DVMM is a collection of software that handles the mapping of resources from the physical realm to the virtual realm. Each hardware node (e.g., a physical processor associated with a node) executes a low-level system software that is a part of the DVMM, a microkernel, and a collection of these instances executing on a number of physical processors form a shared-resource cluster. As discussed above, each collection of cooperating (and communicating) microkernels is a distributed server. There is a one-to-one mapping of a distributed server to a distributed virtual machine monitor (DVMM). The DVMM, according to one embodiment, is as thin a layer as possible.

Figure 8 shows a DVMM architecture 800 according to one embodiment of the present invention. DVMM 800 executes tasks associated with one or more instances of a virtual server (e.g., virtual server instances 801A-801B). Each of the virtual server instances store an execution state of the server. For instance, each of the virtual servers 801A-801B store one or more virtual registers 802A-802B, respectively, that correspond to a register states within each respective virtual server.

DVMM 800 also stores, for each of the virtual servers, virtual server states (e.g., states 803A, 803B) in the form of page tables 804, a register file 806, a virtual network interface (VNIC) and virtual fiber channel (VFC) table. The DVMM also includes a packet scheduler 808 that schedules packets to be transmitted between virtual servers (e.g., via an InfiniBand connection or other connection, or direct process-to-process communication).

I/O scheduler 809 may provide I/O services to each of the virtual servers (e.g., through I/O requests received through the VMA). In addition, the DVMM may support its own I/O, such as communication between nodes. Each virtual device or controller includes an address that may be specified by a virtual server (e.g., in a VMA I/O request). I/O devices is abstracted as a virtual device to the virtual server (e.g., as a PCI or PCI-like device) such that the GOS may access this device. Each VIO device may be described to the GOS by a fixed-format description structure analogous to the device-independent PCI config space window.

Elements of the descriptor may include the device address, class, and/or type information that the GOS may use to associate the device with the proper driver module. The descriptor may also include, for example, one or more logical address space window definitions for device-specific data structures, analogous to memory-mapped control/status registers. The I/O scheduler 809 schedules requests received from virtual servers and distributes them to one or more I/O controllers that interface to the actual I/O hardware. More particularly, the DVMM I/O includes a set of associated drivers that moves the request onto a communication network (e.g., InfiniBand) and to an I/O device for execution. I/O may be performed to a number of devices and systems including a virtual console, CD/DVD player, network interfaces, keyboard, etc. Various embodiments of an I/O subsystem are discussed further below with respect to Figure 9.

CPU scheduler 810 may perform CPU scheduling functions for the DVMM. More particularly, the CPU scheduler may be responsible for executing the one or more GOSs executing on the distributed server. The DVMM may also include supervisor calls 811 that include protected supervisor mode calls executed by an application through the DVMM. As discussed above, protected mode instructions may be handled by the DVMM to ensure isolation and security between virtual server instances.

Packet scheduler 808 may schedule packet communication and access to actual network devices for both upper levels (e.g., GOS, applications) as well as network support within DVMM 800. In particular, packet scheduler 808 may schedule the transmission of packets on one or more physical network interfaces, and perform a mapping between virtual interfaces defined for each virtual server and actual network interfaces.

DVMM 800 further includes a cluster management component 812. Component 812 provides services and support to bind the discrete systems into a cluster and provides basic services for the microkernels within a distributed server to interact with each other. These services include cluster membership and synchronization. Component 812 includes a clustering subcomponent 813 that defines the protocols and procedures by which microkernels of the distributed servers are clustered. At the distributed server level, for example, the configuration appears as a cluster, but above the distributed server level, the configuration appears as a non-uniform memory access, multi-processor single system.

The DVMM further includes a management agent 815. This component is responsible for handling dynamic reconfiguration functions as well as reporting status and logging to other entities (e.g., a management server). Management agent 815 may receive commands for adding, deleting, and reallocating resources from virtual servers. The management agent 815 may maintain a mapping database that defines mapping of virtual resources to physical hardware.

According to various embodiments of the invention microkernels, which form parts of a DVMM, communicate with each other using Distributed Shared Memory (DSM) based on paging and/or function shipping protocols (e.g., object-level). These techniques are used to efficiently provide a universal address space for objects and their implementation methods. With this technology, the set of instances executing on the set of physical processors seamlessly and efficiently shares objects and/or pages. The set of microkernel instances may also provide an illusion of a single system to the virtual server (running on DVMM), which boots and run a single copy of a traditional operating system.

Distributed shared memory 816 is the component that implements distributed shared memory support and provides the unified view of memory to a virtual server and in turn to the Guest Operating System. DSM 816 performs memory mapping from virtual address spaces to memory locations on each of the hardware nodes. The DSM also includes a memory allocator 817 that performs allocation functions among the hardware nodes. DSM 816 also includes a coherence protocol 818 that ensures coherence in memory of the shared-memory multiprocessor. The DSM may be, for example, a virtual memory subsystem used by the DVMM and as the foundation for the Distributed Memory Manager subsystem used by virtual servers.

DSM 816 also includes a communication subsystem that handles distributed memory communication functions. In one example, the DMM may use RDMA techniques for accessing distributed memory among a group of hardware nodes. This communication may occur, for example, over a communication network including one or more network links and switches. For instance, the cluster may be connected by a cluster interconnect layer (e.g., interconnect driver 822) that is responsible for providing the abstractions necessary to allow microkernels to communicate between nodes. This layer provides the abstractions and insulates the rest of the DVMM from any knowledge or dependencies upon specific interconnect features.

Microkernels of the DVMM communicate, for example, over an interconnect such as InfiniBand. Other types of interconnects (e.g., PCI-Express, GigaNet, Ethernet, etc.) may be used. This communication provides a basic mechanism for communicating data and control information related to a cluster. Instances of server functions performed as part of the cluster include watchdog timers, page allocation, reallocation, and sharing, I/O virtualization and other services. Examples of a software system described below transform a set of physical compute servers (nodes) having a high-speed, low latency interconnect into a partitionable set of virtual multiprocessor machines. These virtual multiprocessor machines may be any multiprocessor memory architecture type (e.g., COMA, NUMA, UMA, etc.) configured with any amount of memory or any virtual devices.

According to one embodiment, each microkernel instance of the DVMM executes on every hardware node. As discussed, the DVMM may obtain information from a management database associated with a management server (e.g., server 212). The configuration information allows the microkernel instances of the DVMM to form the distributed server. Each distributed server provides services and aggregated resources (e.g., memory) for supporting the virtual servers.

DVMM 800 may include hardware layer components 820 that include storage and network drivers 821 used to communicate with actual storage and network devices, respectively. Communication with such devices may occur over an interconnect, allowing virtual servers to share storage and network devices. Storage may be performed, for example, using FibreChannel. Networking may be performed using, for example, a physical layer protocol such as Gigabit Ethernet. It should be appreciated that other protocols and devices may be used, and the invention is not limited to any particular protocol or device type. Layer 820 may also include an interconnect driver 822 (e.g., an InfiniBand driver) to allow individual microkernel of the DVMM running on the nodes to communicate with each other and with other devices (e.g., I/O network). DVMM 800 may also include a hardware abstraction 823 that relates virtual hardware abstractions presented to upper layers to actual hardware devices. This abstraction may be in the form of a mapping that relates virtual to physical devices for I/O, networking, and other resources.

DVMM 800 may include other facilities that perform system operations such as software timer 824 that maintains synchronization between clustered microkernel entities. Layer 820 may also include a kernel bootstrap 825 that provides software for booting the DVMM and virtual servers. Functions performed by kernel bootstrap 825 may include loading configuration parameters and the DVMM system image into nodes and booting individual virtual servers.

In another embodiment of the present invention, the DVMM 800 creates an illusion of a Virtual cache-coherent, Non-Uniform Memory Architecture (NUMA) machine to the GOS and its application. However, it should be appreciated that other memory architectures (e.g., UMA, COMA, etc.) may be used, and the invention is not limited to any particular architecture. The Virtual NUMA (or UMA, COMA, etc.) machine is preferably not implemented as a traditional virtual machine monitor, where a complete processor ISA is exposed to the guest operating system, but rather is a set of data structures that abstracts the underlying physical processors to expose a virtual processor architecture with a conceptual ISA to the guest operating system. The GOS may be ported to the virtual machine architecture in much the same way an operating system may be ported to any other physical processor architecture.

A set of Virtual Processors makes up a single virtual multiprocessor system (e.g., a Virtual NUMA machine, a Virtual COMA machine). Multiple virtual multiprocessor systems instances may be created whose execution states are separated from one another. The architecture may, according to one embodiment, support multiple virtual multiprocessor systems simultaneously running on the same distributed server.

In another example architecture, the DVMM provides a distributed hardware sharing layer via the Virtual Processor and Virtual NUMA or Virtual COMA machine. The guest operating system is ported onto the Virtual NUMA or Virtual COMA machine. This Virtual NUMA or Virtual COMA machine provides access to the basic I/O, memory and processor abstractions. A request to access or manipulate these items is handled via APIs presented by the DVMM, and this API provides isolation between virtual servers and allows transparent sharing of the underlying hardware.

### Example System Architecture

Figure 9 is a block diagram of an example system architecture upon which a virtual computing system in accordance with one embodiment of the present invention may be implemented. As discussed above, a virtual computing system may be implemented using one or more resources (e.g., nodes, storage, I/O devices, etc.) linked via an interconnect. As shown in the example system 900 in Figure 9, a system 900 may be assembled having one or more nodes 901A-901B coupled by a communication network (e.g., fabric 908). Nodes 901A-901B may include one or more processors (e.g., processors 902A-902B) one or more network interfaces (e.g., 903A-903B) through which nodes 901A-901B communicate through the network.

As discussed above, nodes may communicate through many different types of networks including, but not limited to InfiniBand and Gigabit Ethernet. More particularly, fabric 908 may include one or more communication systems 905A-905D through which nodes and other system elements communicate. These communication systems may include, for example, switches that communicate messages between attached systems or devices. In the case of a fabric 908 that implements InfiniBand switching, interfaces of nodes may be InfiniBand host channel adapters (HCAs) as are known in the art. Further, communication systems 905A-905B may include one or more InfiniBand switches.

Communication systems 905A-905D may also be connected by one or more links. It should be appreciated, however, that other communication types (e.g., Gigabit Ethernet) may be used, and the invention is not limited to any particular communication type. Further, the arrangement of communication systems as shown in Figure 9 is merely an example, and a system according to one embodiment of the invention may include any number of components connected by any number of links in any arrangement.

Node 901A may include local memory 904 which may correspond to, for example, the node physical memory map 601 shown in Figure 6. More particularly, a portion of memory 904 may be allocated to a distributed shared memory subsystem which can be used for supporting virtual server processes.

Data may be stored using one or more storage systems 913A-913B. These storage systems may be, for example, network attach storage (NAS) or a storage area network (SAN) as are well-known in the art. Such storage systems may include one or more interfaces (e.g., interface 918) that are used to communicate data between other system elements. Storage system may include one or more components including one or more storage devices (e.g., disks 914), one or more controllers (e.g., controllers 915, 919), one or more processors (e.g., processor 916), memory devices (e.g., device 917), or interfaces (e.g., interface 918). Such storage systems may implement any number of communication types or protocols including Fibre Channel, SCSI, Ethernet, or other communication types.

Storage systems 913 may be coupled to fabric 908 through one or more interfaces. In the case of a fabric 908 having an InfiniBand switch architecture; such interfaces may include one or more target channel adaptors (TCAs) as are well-known in the art. System 900 may include one or more I/O systems 906A-906B. These I/O systems 906A-906B may include one or more I/O modules 912 that perform one or more I/O functions on behalf of one or more nodes (e.g., nodes 901A-901B). In one embodiment, an I/O system (e.g., system 906A) includes a communication system (e.g., system 911) that allows communication between one or more I/O modules and other system entities. In one embodiment, communication system 911 includes an InfiniBand switch.

Communication system 911 may be coupled to one or more communication systems through one or more links. Communication system 911 may be coupled in turn to I/O modules via one or more interfaces (e.g., target channel adapters in the case of InfiniBand). I/O modules 912 may be coupled to one or more other components including a SCSI network 920, other communication networks (e.g., network 921) such as, for example, Ethernet, a FibreChannel device or network 922.

For instance, one or more storage systems (e.g., systems 913) or storage networks may be coupled to a fabric though an I/O system. In particular, such systems or networks may be coupled to an I/O module of the I/O system, such as by a port (e.g., SCSI, FibreChannel, Ethernet, etc.) of an I/O module coupled to the systems or networks. It should be appreciated that systems, networks or other elements may be coupled to the virtual computing system in any manner (e.g., coupled directly to the fabric, routed through other communication devices or I/O systems), and the invention is not limited to the number, type, or placement of connections to the virtual computing system.

Modules 912 may be coupled to other devices that may be used by virtual computing systems such as a graphics output 923 that may be coupled to a video monitor, or other video output 924. Other I/O modules may perform any number of tasks and may include any number and type of interfaces. Such I/O systems 906A-906B may support, for virtual servers of a virtual computing system, I/O functions requested by a distributed virtual machine monitor in support of the GOS in its applications.

As discussed above, I/O requests may be sent to I/O controllers (e.g., I/O modules 912) over multiple communication paths within fabric 908. The I/O modules 912 service the requests by routing the requests to virtual or actual hardware that performs the I/O request, and returns status or other information to the distributed virtual machine monitor.

According to one embodiment, GOS I/O devices are virtualized devices. For example, virtual consoles, virtual block devices, virtual SCSI, virtual Host Bus Adapters (HBAs) and virtual network interface controllers (NICs) may be defined which are serviced by one or more underlying devices. Drivers for virtual I/O devices may be multi-path in that the requests may be send over one or more parallel paths and serviced by one or more I/O modules. These multi-path drivers may exist within the GOS, and may be serviced by drivers within the DVMM. Further, these multi-path requests may be serviced in parallel by parallel-operating DVMM drivers which initiate parallel (multi-initiate) requests on hardware. In one embodiment, virtual NICs may be defined for a virtual server that allow multiple requests to be transferred from a node (e.g., node 901A) through a fabric 908 to one or more I/O modules 912. Such communications may occur in parallel (e.g., over parallel connections or networks) and may occur, for instance, over full duplex connections. Similarly, a virtual host bus adapter (HBA) may be defined that can communicate with one or more storage systems for performing storage operations. Requests may be transmitted in a multi-path manner to multiple destinations. Once received at one or more destinations, the parallel requests may be serviced (e.g., also in parallel).

System 900 may also be connected to one or more other communication networks 909 or fabrics 910, or a combination thereof. In particular, system 900 may connect to one or more networks 909 or fabrics 910 through a network communication system 907. In one embodiment, network communication system 907 may be switch, router or other device that translates information from fabric 908 to outside entities such as hosts, networks, nodes or other systems or devices.

### Conclusion

A level of abstraction is created between the set of physical processors and a set of virtual multiprocessor partitions to form a virtualized data center. This virtualized data center comprises a set of virtual, isolated systems separated by boundaries. Each of these systems appears as a unique, independent virtual multiprocessor computer capable of running a traditional operating system and its applications. In one embodiment, the system implements this multi-layered abstraction via a group of microkernels that are a part of a distributed virtual machine monitor (DVMM) to form a distributed server, where each of the microkernels communicates with one or more peer microkernel over a high-speed, low-latency interconnect.

Functionally, a virtual data center is provided, including the ability to take a collection of servers and execute a collection of business applications over the compute fabric. Processor, memory and I/O are virtualized across this fabric, providing a single system image, scalability and manageability. According to one embodiment, this virtualization is transparent to the application.

Ease of programming and transparency is achieved by supporting a shared memory programming paradigm. Both single and multi-threaded applications can be executed without modification on top of various embodiments of the architecture.

According to one embodiment, a part of the distributed virtual machine monitor (DVMM), a microkernel, executes on each physical node. A set of physical nodes may be clustered to form a multi-node distributed server. Each distributed server has a unique memory address space that spans the nodes comprising it. A cluster of microkernels form a distributed server which exports a VMA interface. Each instance of this interface is referred to as a virtual server.

Because there is isolation between the operating system and its application from the underlying hardware, the architecture is capable of being reconfigured. In one embodiment, capability for dynamically reconfiguring resources is provided such that resources may be allocated (or deallocated) transparently to the applications. In particular, capability may be provided to perform changes in a virtual server configuration (e.g., node eviction from or integration to a virtual processor or set of virtual processors). In another embodiment, individual virtual processors and partitions can span physical nodes having one or more processors. In one embodiment, physical nodes can migrate between virtual multiprocessor systems. That is, physical nodes can migrate across distributed server boundaries.

According to another embodiment of the invention, copies of a traditional multiprocessor operating system boot into multiple virtual servers. According to another embodiment of the invention, virtual processors may present an interface to the traditional operating system that looks like a pure hardware emulation or the interface may be a hybrid software/hardware emulation interface.

It should be appreciated that the invention is not limited to each of embodiments listed above and described herein, but rather, various embodiments of the invention may be practiced alone or in combination with other embodiments.

Having thus described several aspects of at least one embodiment of this invention, it is to be appreciated that various alterations, modifications and improvements will readily occur to those skilled in the art. Such alterations, modifications, and improvements are intended to be part of this disclosure, and are intended to be within the spirit and scope of the invention. Accordingly, the foregoing description is by way of example only.

## Claims

1. A system comprising:
a processor;
an operating system that accesses one or more virtual resources; and
an abstraction layer that is adapted to map the one or more virtual resources to one or more physical resources.

2. The system according to claim 1, wherein the operating system is adapted to generate a plurality of function calls, and wherein the abstraction layer is adapted to map the plurality of function calls into processor instructions to be executed on a processor or wherein the abstraction layer is adapted to rewrite the function calls as processor instructions to be executed on a processor.

3. The system according to claim 2, wherein the abstraction layer is adapted to rewrite the plurality of function calls during execution of the plurality of function calls.

4. The system according to any one of the preceding claims, wherein at least one of the operating system and a user program is adapted to generate an exception, and wherein the abstraction layer is adapted to handle the generated exception.

5. The system according to any one of the preceding claims, wherein the abstraction layer is adapted to handle one or more traps generated by at least one of an operating system and a user program.

6. The system according to any one of the preceding claims, wherein the abstraction layer presents a virtual hardware interface to the operating system.

7. The system according to any one of the preceding claims, wherein the abstraction layer includes a microkernel that executes on a node.

8. The system according to claim 7, wherein the node includes one or more physical processors.

9. The system according to any one of the preceding claims, wherein the abstraction layer presents an interface of a virtual processor to the operating system and wherein the operating system may be adapted to execute on the virtual processor.

10. The system according to claim 6, wherein a plurality of virtual processors is grouped into a virtual system to present the virtual hardware interface.

11. The system according to claim 10, wherein the number of virtual processors is permitted to be at least one of:
less than or equal to a number of physical processors in the system; and
any number in relation to the number of physical processors in the system.

12. The system according to any one of the preceding claims, wherein the abstraction layer includes a plurality of microkernels, at least one of which operates cooperatively to share resources of the system and form a distributed virtual machine monitor.

13. The system according to claim 12, wherein at least two of the plurality of microkernels cooperate to present a logical address space to the operating system through a virtual hardware interface, wherein the logical address space may be a physical address space.

14. The system according to claim 12 or 13, wherein the distributed virtual machine monitor is adapted to schedule a plurality of tasks or a plurality of processes as a plurality of respective threads executed by one or more of the plurality of physical processors.

15. The system according to claim 14, wherein the plurality of threads share one or more objects via the operating system.

16. The system according to claim 15, wherein the operating system executes on a virtual processor.

17. The system according to any one of the preceding claims, wherein the abstraction layer defines a plurality of virtual processors, at least two of which are mapped by the abstraction layer to at least two physical processors, respectively, residing within a single node.

18. The system according to any one of the preceding claims, wherein the abstraction layer comprises a plurality of micro kernels, at least two of which operate cooperatively as a cluster.

19. The system according to any one of the preceding claims, wherein the system further comprises a plurality of nodes, and wherein the processor is located in at least one of the plurality of nodes.

20. The system according to any one of claims 1 to 18, wherein the system further comprises a node, and wherein the processor is located in the node.

21. The system according to claim 20, wherein a microkernel program is executed by the node.

22. The system according to claim 18, wherein the plurality of microkernels forms a distributed virtual machine monitor that presents a single hardware interface to the operating system.

23. The system according to any one of the preceding claims, wherein the abstraction layer emulates a processor architecture.

24. The system according to claim 23, wherein the processor architecture is an architecture of a virtual processor.

25. The system according to claim 24, wherein at least one of a plurality of function calls in the virtual processor architecture are mapped to one or more physical processors.

26. The system according to any one of the preceding claims, wherein the abstraction layer presents a single virtual system to the operating system, and wherein the abstraction layer maps the virtual system onto one or more of a plurality of physical processors.

27. The system according to any one of the preceding claims, wherein the abstraction layer presents to the operating system one or more virtual processors, wherein the one or more virtual processors are mapped onto a plurality of physical processors.

28. The system according to claim 27, wherein one or more of the plurality of physical processors are hardware processors that reside within a node.

29. The system according to claim 27 or 28, wherein the one or more virtual processors are associated with a virtual server, and wherein the one or more virtual processors are mapped onto one or more physical processors that reside within at least one of a group comprising a single node and different nodes.

30. The system according to any one of claims 27 to 29, wherein at least one of the one or more virtual processors is associated with a first virtual server, and another one of the one or more virtual processors is associated with a second virtual server, and wherein the at least one of the virtual processors and the another one of the one or more virtual processors are mapped to respective physical processors that reside within a single node.

31. The system according to claim 8, wherein the abstraction layer is adapted to define a virtual server system comprising one or more virtual processors, and wherein the system further comprises a hierarchical scheduling system that allows a plurality of virtual processors to be shared among the plurality of physical processors.

32. The system according to claim 31, wherein the hierarchical scheduling system comprises a first and second scheduler, wherein the operating system includes the first scheduler which schedules at least one task to be performed by the virtual server system, and wherein the distributed virtual machine monitor includes the second scheduler, the second scheduler being associated with the virtual server system and being adapted to schedule the at least one task to be executed by at least one physical processor associated with the virtual server.

33. The system according to claim 8, wherein the system comprises virtual memory shared among the plurality of virtual processors.

34. The system according to claim 33, wherein each of the plurality of virtual processors is restricted to use a distributed memory that is mapped onto one or more physical memory locations.

35. The system according to any one of the preceding claims, wherein the abstraction layer presents to the operating system a virtual cache-coherent, non-uniform memory access (NUMA) system or a virtual cache-only memory architecture (COMA) or a virtual uniform memory access (UMA) architecture.

36. The system according to claim 35, wherein the architecture comprises a set of virtual processors executing on one or more physical nodes.

37. The system according to claim 35 or 36, wherein the architecture provides access to basic I/O, memory and processor abstractions.

38. The system according to claim 12, wherein the distributed virtual machine monitor isolates the operating system from one or more physical processors or from a shared virtual memory system.

39. The system according to claim 12 or 18, wherein at least two of the plurality of microkernels are adapted to communicate using a synchronization protocol and/or communicate using a cache-only distributed shared memory paging protocol and/or communicate using at least one of distributed shared memory protocol and a function shipping protocol.

40. The system according to claim 39, wherein the function shipping protocol is an object-level function shipping protocol.

41. The system according to claim 39 or 40, wherein at least two of the plurality of microkernels share objects and/or pages.

42. The system according to any one of the preceding claims, wherein the abstraction layer presents, to one or more operating systems a plurality of virtual processors grouped into one or more virtual multiprocessor systems.

43. The system according to claim 42, wherein each of the one or more operating systems are executed by a respective one of the one or more virtual multiprocessor systems.

44. The system according to claim 42 or 43, wherein the system is adapted to migrate physical processors among the one or more virtual multiprocessor systems.

45. The system according to claim 42, 43 or 44, wherein the one or more of virtual multiprocessor systems span one or more physical processors.

46. The system according to any one of claims 42 to 45, wherein at least one virtual multiprocessor system may be configured to include or exclude one or more virtual processors while the virtual multiprocessor system is in an operating mode.

47. A computer-readable medium having stored thereon a data structure comprising data mapping a virtual processor to one or more physical processors.

48. A system comprising:
a manager adapted to create an instance of a virtual server; and
a resource allocated to the instance of the virtual server, the virtual resource being associated with one or more actual resources.

49. The system according to claim 48, wherein the resource includes at least one virtual processor being associated with one or more nodes.

50. The system according to claim 48 or 49, wherein the virtual server is associated with multiple virtual processors.

51. The system according to claim 48, 49 or 50, wherein the virtual server presents a single system image while executing across the one or more nodes.

52. The system according to claim 49, 50 or 51, wherein the one or more nodes are coupled by an interconnect.

53. The system according to claim 52, wherein the interconnect is InfiniBand, PCI-Express, GigaNet, Gigabit Ethernet, or 10 Gigabit Ethernet.

54. The system according to claim 52, wherein the interconnect uses RDMA.

55. The system according to any one of claims 48 to 54, wherein the virtual server is adapted to execute an application on the one or more nodes without modification.

56. The system according to any one of claims 48 to 55, wherein the manager is adapted to perform a mapping between the virtual resource and the one or more actual resources.

57. The system according to any one of claims 48 to 56, wherein the virtual resource is a virtual network interface, and the actual resource includes an actual network interface, or wherein the virtual resource is a virtual storage entity, and the actual resource includes an actual storage device.

58. The system according to any one of claims 48 to 57, wherein the manager is adapted to perform a reallocation of the virtual resource to another virtual server instance.

59. The system according to any one of claims 48 to 58, wherein the system further comprises a distributed server that is executed on the one or more nodes.

60. The system according to claim 59, wherein the manager is adapted to perform an association between the one or more actual resources and at least one of the distributed server and virtual server.

61. The system according to any one of claims 48 to 60, wherein the system includes one or more unallocated actual resources, and wherein the manager is adapted to perform an association between the one or more unallocated resources and one or more respective distributed servers or virtual servers.

62. The system according to any one of claims 48 to 61, wherein the virtual server is associated with a first collection of resources, and wherein the manager is adapted to disassociate the virtual server with the first collection of resources, and wherein the manager is adapted to associate the virtual server with a second collection of resources.

63. The system according to claim 62, wherein the second collection of resources is presented to the virtual server by a distributed server.

64. The system according to claim 63, wherein the distributed server is executed on a plurality of nodes.

65. A computer system comprising:
a plurality of processors; and
a virtualization layer adapted to define one or more virtual servers, at least one of which presents a single computer system interface to an operating system, the single computer system interface defining a plurality of instructions, wherein at least one of the plurality of instructions is directly executed on at least one of the plurality of processors, and at least one other of the plurality of instructions is handled by the virtualization layer.

66. The computer system according to claim 65, wherein the virtualization layer includes a microkernel that executes on at least one processor.

67. The computer system according to claim 65 or 66, wherein the at least one of the plurality of instructions is a non-privileged instruction.

68. The computer system according to claim 67, wherein the at least one other of the plurality of instructions is a privileged instruction.

69. The computer system according to any one of claims 65 to 68, wherein the virtualization layer includes code that handles a call to the privileged instruction.

70. The computer system according to claim 67, wherein the virtualization layer passes the non-privileged instruction to the at least one of the plurality of processors without intervention.

71. The computer system according to any one of claims 65 to 70, further comprising a plurality of resources, wherein each of the plurality of processors executes a respective instance of a microkemel program, and wherein each of the respective instances of the microkernel program are adapted communicate to cooperatively share the plurality of resources of the computer system.

72. The computer system according to any one of claims 65 to 71, wherein the virtual server includes one or more virtual processors, wherein the virtualization layer is adapted to schedule tasks associated with at least one of the one or more virtual processors as a thread that is executed on at least one of the plurality of processors.

73. The computer system according to claim 72, wherein the virtualization layer is adapted to schedule a plurality of virtual processor tasks for execution substantially in parallel.

74. The computer system according to any one of claims 65 to 73, further comprising a plurality of resources, wherein at least one of the one or more virtual servers includes at least two virtual interfaces, both of which are adapted to send requests for access to the plurality of resources in parallel.

75. The computer system according to claim 74, wherein at least one of the at least two virtual interfaces includes a virtual network interface or includes a virtual storage adapter, wherein the virtual storage adapter may be a virtual host bus adapter (HBA).

76. The computer system according to claim 75, further comprising at least one I/O server, wherein the parallel access requests are serviced in parallel by the I/O server, or further comprising at least one I/O device, wherein the parallel access requests are serviced in parallel by the I/O device.

77. The computer system according to claim 76, wherein the parallel access requests are transmitted over a switched communication network or transmitted over a packet-based network.

78. The computer system according to claim 77, wherein the switched communication network includes an InfiniBand switched fabric.

79. The computer system according to any one of claims 65 to 78, wherein the virtualization layer is adapted to map one or more virtual resources to one or more physical resources.

80. A system according to any one of the preceding claims, wherein the one or more physical resources includes at least one of input/output (I/O) devices, processors, interconnects and storage entities.
